(19) Europäisches Patentamt
European Patent Office
Office européen des brevets

(11) **EP 4 633 153 A1**

(12) **EUROPEAN PATENT APPLICATION**

(43) Date of publication:
**15.10.2025   Bulletin 2025/42**

(21) Application number: **24305559.7**

(22) Date of filing: **08.04.2024**

(51) International Patent Classification (IPC):
**H04N 19/12** (2014.01)   **H04N 19/157** (2014.01)
**H04N 19/176** (2014.01)   **H04N 19/593** (2014.01)
**H04N 19/61** (2014.01)

(52) Cooperative Patent Classification (CPC):
**H04N 19/176; H04N 19/12; H04N 19/157;
H04N 19/593; H04N 19/61**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
  35830 BETTON (FR)**
• **NASER, Karam
  35250 MOUAZE (FR)**
• **BONNINEAU, Charles
  MONTREAL, H2J 1G1 (CA)**
• **PURI, Saurabh
  SAINT-LAZARE, J7T 0P6 (CA)**

(74) Representative: **Rittner, Karsten
  Rittner & Partner
  Patentanwälte mbB
  Schiffgraben 17
  30159 Hannover (DE)**

(54) **JOINT INHERITANCE OF INTRA PREDICTION AND TRANSFORM PARAMETERS**

(57)   Systems, methods, and instrumentalities are disclosed for performing joint inheritance of intra prediction and transform parameters. A video decoding device may determine whether a merge mode associated with an intra-type prediction mode is enabled for a video block in a picture. If a merge mode is associated with an intra-type prediction mode for the video block, the video decoding device may generate a merge candidate list associated with the merge mode. The video decoding device may determine, based on obtained transform information associated with a selected candidate of the merge candidate list, an inverse transform type for a prediction of the video block. The video decoding device may predict the video block and decode the video block based on the inverse transform type. The video decoding device may decode the picture based on the video block.

FIG. 23

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for performing joint inheritance of intra prediction and transform parameters. For example, a set of data being derived through an intra-dedicated merge mechanism may be extended to include transform parameters.

A video decoding device may determine whether a merge mode associated with an intra-type prediction mode is enabled for a video block in a picture. The intra-type prediction mode may be, for example, one of template-based intra mode derivation (TIMD), decoder side intra mode derivation (DIMD), extrapolation filter-based intra prediction mode (EIP), or intra template matching prediction (IntraTMP). If a merge mode is associated with an intra-type prediction mode for the video block, the video decoding device may generate a merge candidate list associated with the merge mode. The video decoding device may determine, based on obtained transform information associated with a selected candidate of the merge candidate list, an inverse transform type associated with the video block. The video decoding device may predict the video block (e.g., based on a prediction block in the picture). The video decoding device may decode the video block based on the inverse transform type. The video decoding device may decode the picture based on the video block.

In examples, the transform information may indicate a primary transform pair and/or a secondary transform identifier associated with the selected candidate. The video decoding device may select the candidate from the merge candidate list based on a merge index. The video decoding device may perform an inverse transform of a residual coefficient associated with the video block using the inverse transform type and may apply the inverse transformed residual coefficient to the prediction block (e.g., an intra-predication block) to generate the predicted video block.

In examples, the selected candidate may be associated with intra-type prediction parameter(s) that indicate a prediction mode and/or a fusion weight associated with the selected candidate. The video decoding device may predict the video block further based on the intra-type prediction parameter(s).

In examples, the inverse transform type may be a primary transform type. The primary transform type of the selected candidate may be indicated by the transform information associated with the selected candidate. The video decoding device may, for example, receive an indicator indicating that the primary transform type is to be set to a primary transform type of the selected candidate. The video decoding device may set the primary transform type to a primary transform type of the selected candidate, for example, based on the indicator.

The video decoding device may, for example, determine a subset of merge candidates from the merge candidate list and the selected candidate may be selected from the determined subset of merge candidates.

In examples, the video decoding device may decode a syntax element (e.g., a syntax element received via a bitstream) and set a transform type based on a decoded syntax element. For example, the video decoding device may decode a primary transform type syntax element and based on the decoded primary transform type syntax element, set the primary transform type to a primary transform type of the selected candidate of the subset of merge candidates. The video decoding device may decode a secondary transform type syntax element and based on the decoded secondary transform type syntax element, set the secondary transform type to a secondary transform type of the selected candidate of the subset of merge candidates.

In examples, the inverse transform type may be a secondary transform type. The video decoding device may set the secondary transform type to a secondary transform type of the selected candidate (e.g., which may be indicated by the transform information associated with the selected candidate).

A video encoding device may determine whether a merge mode associated with an intra-type prediction mode is enabled for a video block in a picture. The intra-type prediction mode may be, for example, one of template-based intra mode derivation (TIMD), decoder side intra mode derivation (DIMD), extrapolation filter-based intra prediction mode (EIP), or intra template matching prediction (IntraTMP). If a merge mode is associated with an intra-type prediction mode for the video block, the video encoding device may generate a candidate list (e.g., a merge candidate list) associated with the merge mode. The video encoding device may obtain transform information associated with a selected candidate of the merge candidate list. The video encoding device may determine, based on the obtained transform information, a transform type for a transform of a residual coefficient associated with the video block. The video encoding device may predict the video block (e.g., based on a prediction block in the picture) and may generate the residual coefficient based on the predicted video block. The video encoding device may perform the transform of the residual coefficient based on the transform type.

In examples, the transform information may indicate a primary transform pair and/or a secondary transform identifier associated with the selected candidate. The video encoding device may select the candidate from the merge candidate list. The video encoding device may include the transform of the residual coefficient in video data.

In examples, the selected candidate may be further associated with intra-type prediction parameter(s). The intra-type prediction parameter(s) may indicate a prediction mode and/or a fusion weight associated with the selected candidate. The video block may be predicted based on the intra-type prediction parameter(s).

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). Video data (e.g., a video bitstream) may comprise an indication of a transform of a residual coefficient as described herein. A computer-readable medium may include instructions for causing one or more processors to perform methods described herein. A computer program product may include instructions which, when the program is executed by one or more processors, may cause the one or more processors to carry out the methods described herein.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a a system in which various aspects and examples may be implemented.

FIG. 5 illustrates examples of neighboring blocks that may be used to derive a most probable modes (MPM) list.

FIG. 6 illustrates an example of histogram of gradients (HoG) computation from a template with a width of three pixels.

FIG. 7 illustrates an example of prediction fusion.

FIG. 8 illustrates examples of Intra template matching (IntraTMP) search areas.

FIG. 9 illustrates an example of using an IntraTMP block vector for an intra block copy (IBC) block.

FIG. 10 illustrates an example of an extended multiple reference line (MRL) candidate list.

FIG. 11 illustrates an example of a template area.

FIG. 12 illustrates examples of filter shapes with multiple inputs and one output (e.g., as used in EIP).

FIG. 13 illustrates examples of reconstructed areas.

FIG. 14 illustrates an example of generating predictions for different positions in a current block by a diagonal order.

FIG. 15 illustrates examples of spatial geometric partitioning mode (GPM) candidates.

FIG. 16 illustrates an example of a GPM candidate.

FIG. 17 illustrates an example of GPM blending.

FIG. 18 illustrates examples of non-adjacent spatial neighboring candidates for a template-based intra mode derivation (TIMD) merge mode.

FIG. 19 illustrates examples of non-adjacent spatial neighboring candidates for a decoder side intra mode derivation (DIMD) merge mode.

FIG. 20 illustrates an example of a region of interest (ROI) for low frequency non-separable transforms (LFNST)16.

FIG. 21 illustrates an example of an ROI for LFNST8.

FIG. 22 illustrates an example of non-separable primary transform (NSPT) applied to a block (e.g., a small block) and an example of LFNST is applied for the rest.

FIG. 23 illustrates an example CU decoding method using an enriched template-based intra mode derivation (TIMD) merge mode.

## DETAILED DESCRIPTION

A more detailed understanding may be had from the following description, given by way of example in conjunction with the accompanying drawings.

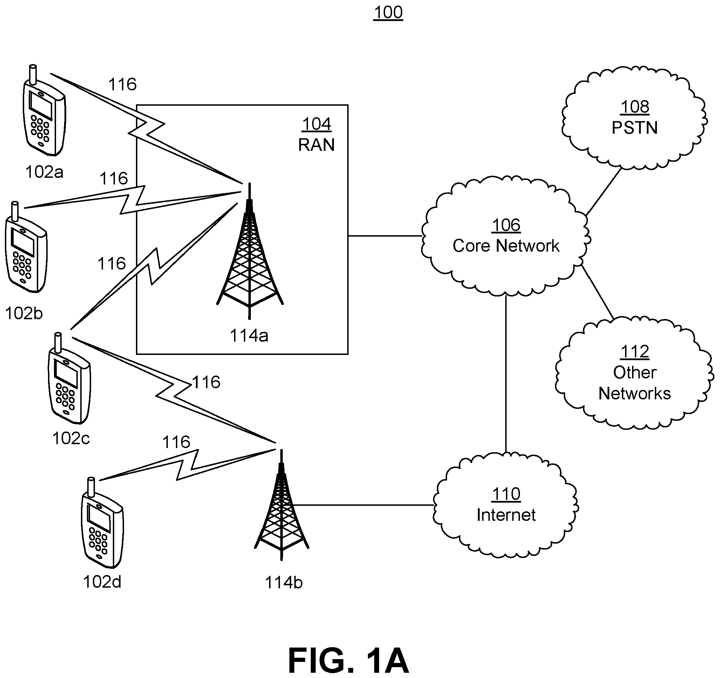

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

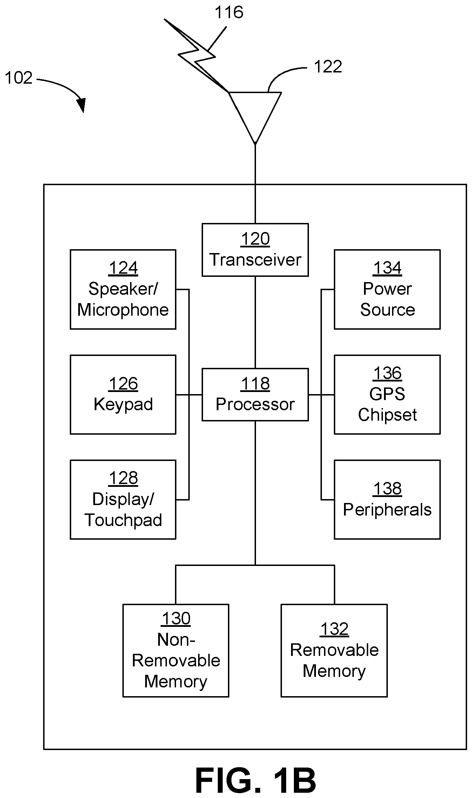

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

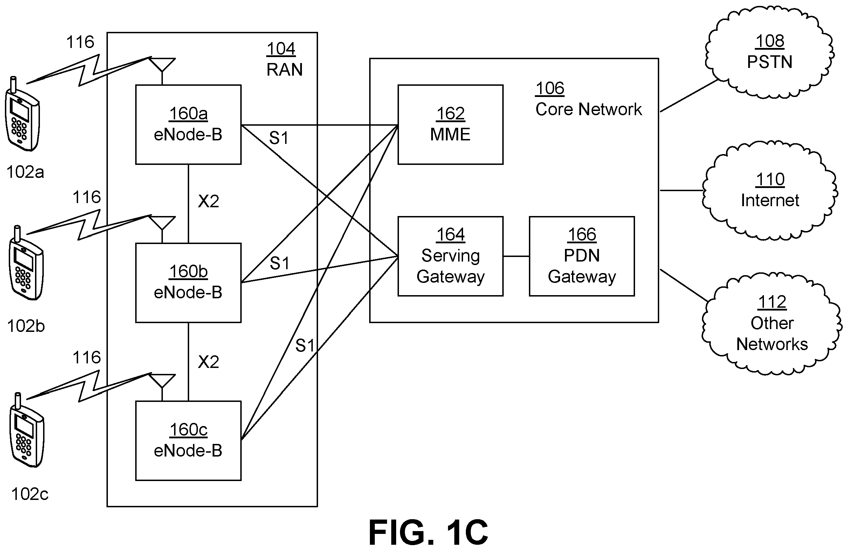

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102cwith access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11 ac, 802.11 af, and 802.11 ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11 ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

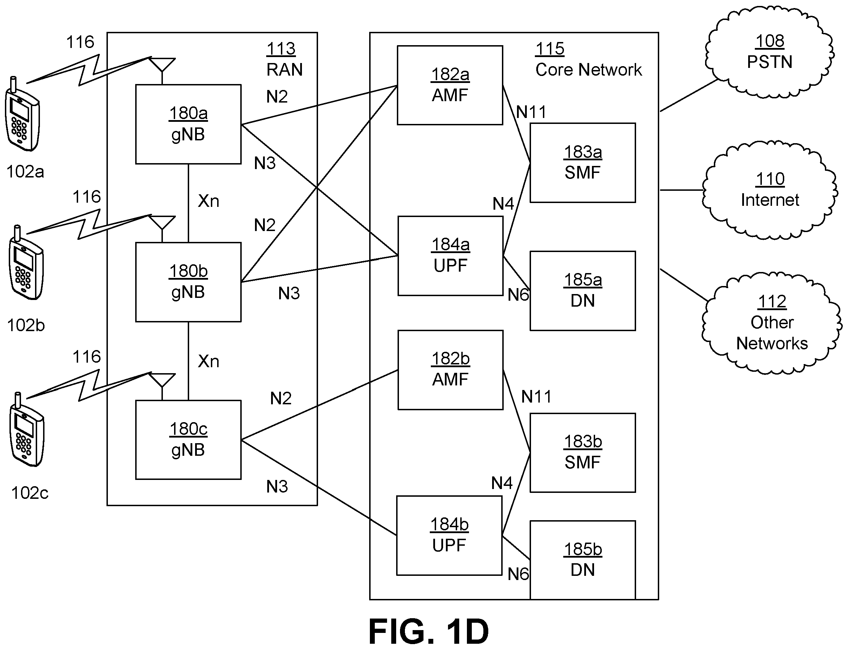

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

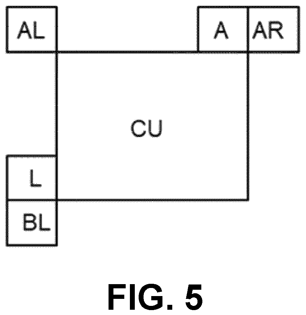

The aspects described and contemplated in this application may be implemented in many different forms. FIGS. 5-23 described herein may provide some examples, but other examples are contemplated. The discussion of FIGS. 5-23 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

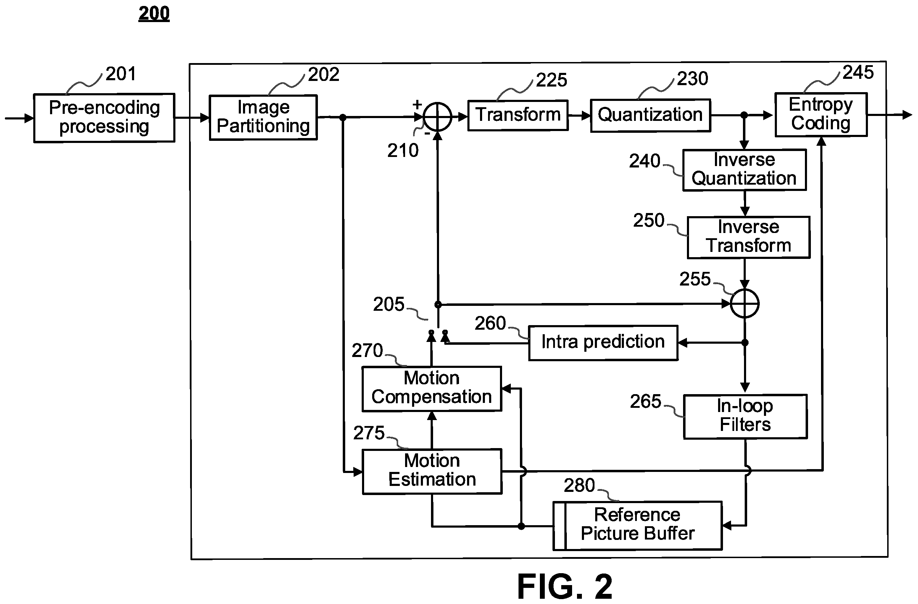

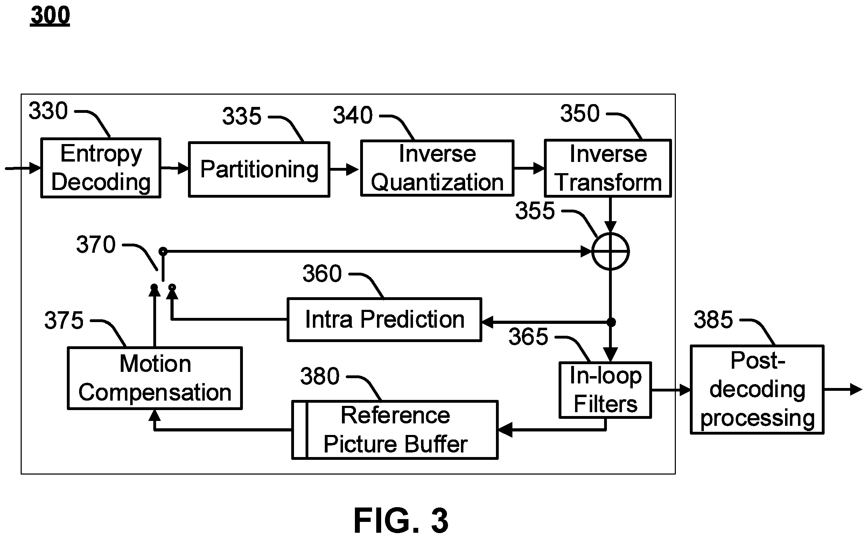

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as block sizes, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

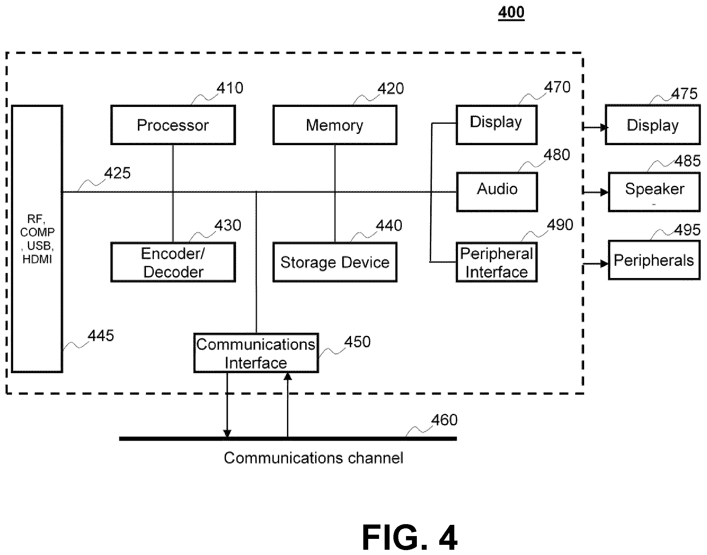

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, determining whether a merge mode associated with an intra-type prediction mode (e.g.,TIMD, DIMD, EIP, or IntraTMP) is enabled for a video block (e.g., in a picture); if a merge mode is associated with an intra-type prediction mode for the video block, generating a merge candidate list associated with the merge mode; determining, based on obtained transform information associated with a selected candidate of the merge candidate list, an inverse transform type associated with the video block; predicting the video block (e.g., based on a prediction block in the picture); decoding the video block based on the inverse transform type; decoding the picture based on the video block; obtaining the transform information that indicates a primary transform pair and/or a secondary transform identifier associated with the selected candidate; selecting the candidate from the merge candidate list, for example, based on a merge index; performing an inverse transform of a residual coefficient associated with the video block using the inverse transform type and/or applying the inverse transformed residual coefficient to a prediction block (e.g., an intra-predication block) to generate the predicted video block; selecting the candidate associated with intra-type prediction parameter(s) that indicate a prediction mode and/or a fusion weight associated with the selected candidate; predicting the video block further based on the intra-type prediction parameter(s); determining a primary transform type of the video block as the primary transform type of the selected candidate, indicated by the transform information associated with the selected candidate; receiving an indicator indicating that the primary transform type is to be set to a primary transform type of the selected candidate; setting the primary transform type to a primary transform type of the selected candidate, for example, based on the indicator; determining a subset of merge candidates from the merge candidate list and/or selecting the candidate from the determined subset of merge candidates; decoding a syntax element (e.g., a syntax element received via a bitstream) and/or setting a transform type based on a decoded syntax element; decoding a primary transform type syntax element and based on the decoded primary transform type syntax element, setting the primary transform type to a primary transform type of the selected candidate of the subset of merge candidates; decoding a secondary transform type syntax element and based on the decoded secondary transform type syntax element, setting the secondary transform type to a secondary transform type of the selected candidate of the subset of merge candidates; determining a secondary transform type; setting the secondary transform type to a secondary transform type of the selected candidate (e.g., which may be indicated by the transform information associated with the selected candidate); etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining whether a merge mode associated with an intra-type prediction mode (e.g., TIMD, DIMD, EIP, or IntraTMP) is enabled for a video block (e.g., in a picture); if a merge mode is associated with an intra-type prediction mode for the video block, generating a merge candidate list associated with the merge mode; determining, based on obtained transform information associated with a selected candidate of the merge candidate list, an transform type associated with the video block; predicting the video block (e.g., based on a prediction block in the picture); encoding the video block based on the transform type; encoding the picture based on the video block; determining, based on the obtained transform information, a transform type for a transform of a residual coefficient associated with the video block; predicting the video block (e.g., based on a prediction block in the picture) and generating the residual coefficient based on the predicted video block; performing the transform of the residual coefficient based on the transform type; obtaining the transform information that indicates a primary transform pair and/or a secondary transform identifier associated with the selected candidate; selecting the candidate from the merge candidate list, for example, based on a merge index; performing a transform of a residual coefficient associated with the video block using the transform type and/or including the transformed residual coefficient in video data; selecting the candidate associated with intra-type prediction parameter(s) that indicate a prediction mode and/or a fusion weight associated with the selected candidate; predicting the video block further based on the intra-type prediction parameter(s); determining a primary transform type of the video block as the primary transform type of the selected candidate, indicated by the transform information associated with the selected candidate; sending an indicator indicating that the primary transform type is to be set to a primary transform type of the selected candidate; setting the primary transform type to a primary transform type of the selected candidate; determining a subset of merge candidates from the merge candidate list and/or selecting the candidate from the determined subset of merge candidates; setting a transform type and/or encoding a syntax element based on the transform type; setting the primary transform type to a primary transform type of the selected candidate of the subset of merge candidates and/or encoding a primary transform type syntax element to indicate setting the primary transform type to a primary transform type of the selected candidate of the subset of merge candidates; setting the secondary transform type to a secondary transform type of the selected candidate of the subset of merge candidates and/or encoding a secondary transform type syntax element to indicating setting the secondary transform type to a secondary transform type of the selected candidate of the subset of merge candidates; determining a secondary transform type; setting the secondary transform type to a secondary transform type of the selected candidate (e.g., which may be indicated by the transform information associated with the selected candidate); including the transform of the residual coefficient in video data; etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, coding syntax on indicators, flags, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, a transform of a residual coefficient, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Systems, methods, and instrumentalities are disclosed for performing joint inheritance of intra prediction and transform parameters. For example, a set of data being derived through an intra-dedicated merge mechanism may be extended to include transform parameters.

A video decoding device may determine whether a merge mode associated with an intra-type prediction mode is enabled for a video block in a picture. The intra-type prediction mode may be, for example, one of template-based intra mode derivation (TIMD), decoder side intra mode derivation (DIMD), extrapolation filter-based intra prediction mode (EIP), or intra template matching prediction (IntraTMP). If a merge mode is associated with an intra-type prediction mode for the video block, the video decoding device may generate a merge candidate list associated with the merge mode. The video decoding device may determine, based on obtained transform information associated with a selected candidate of the merge candidate list, an inverse transform type associated with the video block. The video decoding device may predict the video block (e.g., based on a prediction block in the picture). The video decoding device may decode the video block based on the inverse transform type. The video decoding device may decode the picture based on the video block.

In examples, the transform information may indicate a primary transform pair and/or a secondary transform identifier associated with the selected candidate. The video decoding device may select the candidate from the merge candidate list based on a merge index. The video decoding device may perform an inverse transform of a residual coefficient associated with the video block using the inverse transform type and may apply the inverse transformed residual coefficient to the prediction block (e.g., an intra-predication block) to generate the predicted video block.

In examples, the selected candidate may be associated with intra-type prediction parameter(s) that indicate a prediction mode and/or a fusion weight associated with the selected candidate. The video decoding device may predict the video block further based on the intra-type prediction parameter(s).

In examples, the inverse transform type may be a primary transform type. The primary transform type of the selected candidate may be indicated by the transform information associated with the selected candidate. The video decoding device may, for example, receive an indicator indicating that the primary transform type is to be set to a primary transform type of the selected candidate. The video decoding device may set the primary transform type to a primary transform type of the selected candidate, for example, based on the indicator.

The video decoding device may, for example, determine a subset of merge candidates from the merge candidate list and the selected candidate may be selected from the determined subset of merge candidates.

In examples, the video decoding device may decode a syntax element (e.g., a syntax element received via a bitstream) and set a transform type based on a decoded syntax element. For example, the video decoding device may decode a primary transform type syntax element and based on the decoded primary transform type syntax element, set the primary transform type to a primary transform type of the selected candidate of the subset of merge candidates. The video decoding device may decode a secondary transform type syntax element and based on the decoded secondary transform type syntax element, set the secondary transform type to a secondary transform type of the selected candidate of the subset of merge candidates.

In examples, the inverse transform type may be a secondary transform type. The video decoding device may set the secondary transform type to a secondary transform type of the selected candidate (e.g., which may be indicated by the transform information associated with the selected candidate).

A video encoding device may determine whether a merge mode associated with an intra-type prediction mode is enabled for a video block in a picture. The intra-type prediction mode may be, for example, one of template-based intra mode derivation (TIMD), decoder side intra mode derivation (DIMD), extrapolation filter-based intra prediction mode (EIP), or intra template matching prediction (IntraTMP). If a merge mode is associated with an intra-type prediction mode for the video block, the video encoding device may generate a candidate list (e.g., a merge candidate list) associated with the merge mode. The video encoding device may obtain transform information associated with a selected candidate of the merge candidate list. The video encoding device may determine, based on the obtained transform information, a transform type for a transform of a residual coefficient associated with the video block. The video encoding device may predict the video block (e.g., based on a prediction block in the picture) and may generate the residual coefficient based on the predicted video block. The video encoding device may perform the transform of the residual coefficient based on the transform type.

In examples, the transform information may indicate a primary transform pair and/or a secondary transform identifier associated with the selected candidate. The video encoding device may select the candidate from the merge candidate list. The video encoding device may include the transform of the residual coefficient in video data.

In examples, the selected candidate may be further associated with intra-type prediction parameter(s). The intra-type prediction parameter(s) may indicate a prediction mode and/or a fusion weight associated with the selected candidate. The video block may be predicted based on the intra-type prediction parameter(s).

Multiple lists of most probable modes (MPM) may be provided including, for example, a primary MPM list and a secondary MPM list. The primary MPM (PMPM) list may include a first number of (e.g., 6) entries (e.g., representing different coding modes) and the secondary MPM (SMPM) list may include a second number of (e.g., 16) entries. In examples, a video coding device (e.g., an encoder or a decoder) may construct a general MPM list (e.g., with 22 entries) and select a first subset of entries (e.g., the first 6 entries) in this general MPM list to form the PMPM list, and a second subset of entries (e.g., rest of entries) in this general MPM list to form the SMPM list. The first entry in the general MPM list may correspond to a Planar mode. Other entries in the general MPM list may include intra modes based on the left (L), above (A), below-left (BL), above-right (AR), and above-left (AL) neighboring blocks of a current block (e.g., a current coding unit (CU)), as illustrated by FIG. 5. Probable decoder side intra mode derivation (DIMD) modes may be sorted in an ascending order of sum of absolute differences (SAD) costs. A number of (e.g., up to 5) modes with the smallest SAD costs may be added to the general MPM list. The SAD costs may be computed between the prediction and the reconstruction samples of a template. In examples, sorted directional modes with added offset may be added to the general MPM list, followed by one or more default modes, until the general MPM list (e.g., with 22 entries) is constructed.

In the example shown in FIG. 5, if the CU block is vertically oriented, the neighboring blocks may be used in the following order during the construction of the general MPM list: A, L, BL, AR, AL; if the CU block is horizontally oriented, the neighboring blocks may be used in the following order during the construction of the general MPM list: L, A, BL, AR, AL.

In examples, the MPM list may be divided (e.g., equally divided into four groups) and indices may be assigned to the groups and/or the modes within each group. A coding device (e.g., a decoder) may parse the group indices and/or mode indices to determine which mode in a selected group may be used.

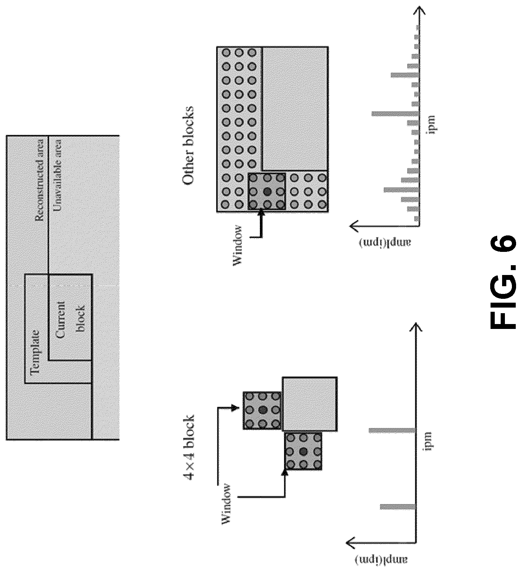

In examples (e.g., if DIMD is applied), one or more (e.g., up to five) intra modes may be derived from reconstructed neighboring samples, for example, based on a histogram of gradients (HoG). The HoG may be determined (e.g., computed) by applying horizontal and vertical Sobel filters on pixels in a template (e.g., of width 3) around a video block, as illustrated by FIG. 6. Once determined, the intra prediction modes (IPMs) corresponding to one or more (e.g., the top two) tallest histogram bars may be selected for the video block.

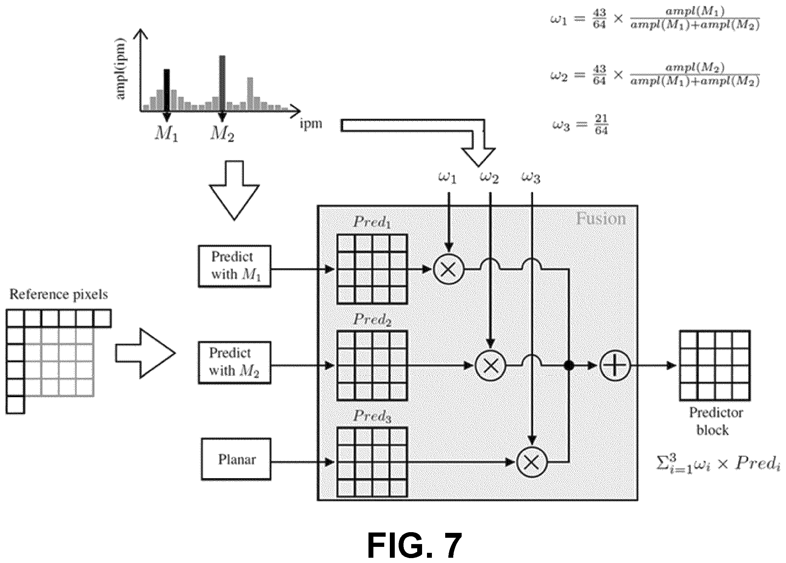

In examples, a number of (e.g., up to five) intra modes may be derived from reconstructed neighbor samples. Predictors (e.g., five predictors) associated with those intra modes may be combined with a planar mode predictor (e.g., based on a weighted average of the predictors and using weights derived from a histogram of gradients amplitudes), as illustrated by FIG. 7. For a block of size W×H, the weight for each of the derived modes (e.g., predictors) may be modified if one the above or left histogram magnitude is larger (e.g., twice larger) than the other one. In that case, the weights may be location dependent and may be computed as follows:

If the above histogram magnitude is twice the left histogram, then:

$$w_i(x, y) = wDimd_i + \Delta_i - 2\Delta_i \frac{y}{(H-1)}$$

If the left histogram magnitude is twice the above histogram, then:

$$w_i(x, y) = wDimd_i + \Delta_i - 2\Delta_i \frac{x}{(W-1)}$$

where $wDimd_i$ may be the unmodified uniform weight of the DIMD selected, and $\Delta_i$ may be pre-defined and set to 10.

Derived intra modes may be included in a primary list of intra MPM. DIMD operations may be performed before the MPM list is constructed. The primary derived intra mode of a DIMD block may be stored with the block and used for MPM list construction for one or more neighboring blocks.

Intra template matching prediction (IntraTMP) may copy a prediction block (e.g., the best prediction block) from the reconstructed part of a current picture or frame based on a determination that an L-shaped template associated with the prediction block matches a current template (e.g., an L-shaped template associated with a current block). For a predefined search range, an encoder may search for the most similar template to the current template in the reconstructed part of the current frame and may use the corresponding block as the prediction block. The encoder may signal the use of IntraTMP, and a decoder may perform the same (e.g., similar) operations as those performed by the encoder.

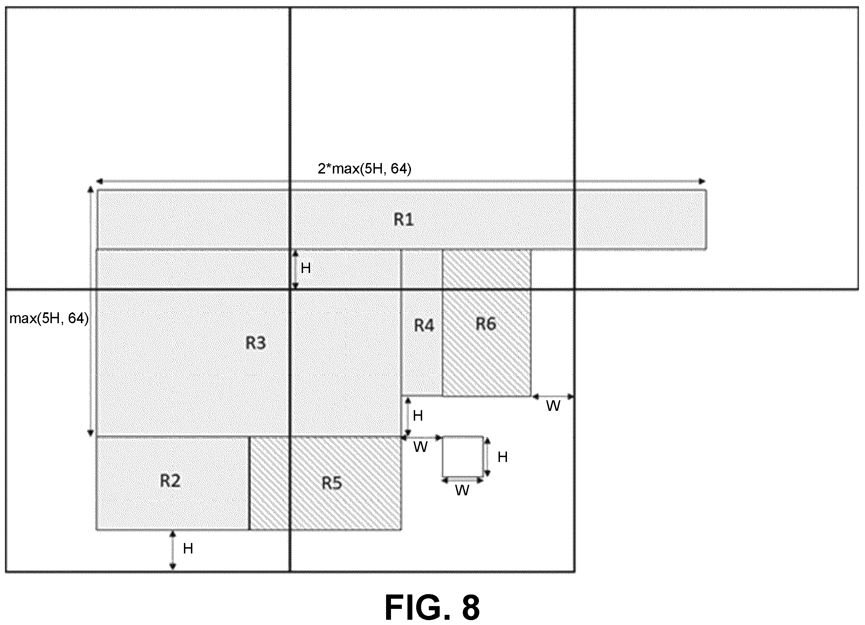

With IntraTMP, a prediction signal may be generated by matching the L-shaped, top-only, or left-only causal neighbor of the current block with another block in a predefined search area, as depicted in FIG. 8. Multiple (e.g., 6) predefined search areas may be used for an IntraTMP search, such as, for example, R1 to R6 in FIG. 8, which may include reconstructed samples from the top and left CTUs as well as part of the reconstructed samples within the current CTU that may be located in the above, left, bottom-left and top-right neighboring areas of the current block.

A sum of absolute differences (SAD) may be used as a cost function for an IntraTMP search. The predefined search areas may be searched in a certain order, such as, for example, in the order of R4, R5, R6, R1, R2, and R3 shown in FIG. 8. Within each search area or region, a decoder may construct a candidate list of (e.g., up to 19) template matching block vectors (BVs), which may be ranked in an ascending order according to template costs (e.g., SAD). One or more of the following modes may be supported. In a single predictor mode, a single predictor may be selected from the candidate list. In a fusion of multiple predictors mode, multiple predictors may be blended to derive a final prediction block. The blending may be performed based on weights that may be computed from the template matching cost of each predictor, using a Wiener-filter based weight derivation method, etc. In a sub-pel precision mode, if a single predictor is used, sub-pel precision (e.g., 1/2-pel precision, 1/4-pel precision, and/or 3/4-pel precision) may be used, each with multiple (e.g., 8) possible directions. In a linear filter model, a linear filter may be learned between a reference template and the current template, and applied to the reference block. In examples, the linear filter model mode may be used for a single predictor (e.g., if sub-pel precision is not used).

The dimensions of each search region (SearchRange_w, SearchRange_h) may be set proportional to the block dimension (BlkW, BlkH) to have a fixed number of SAD comparisons per pixel. This may be illustrated by the following formula:

$$SearchRange\_w = min(64, a * BlkW)$$

$$SearchRange\_h = min(64, a * BlkH)$$

where "a" may be a constant used to control a gain/complexity trade-off. In examples, "a" may be set equal to 5.

Within IntraTMP, the search range of one or more (e.g., all) search regions may be subsampled (e.g., by a factor of 3), for example, to speed up the template matching process. After finding a match (e.g., a best match) based on the sub-sampling (e.g., via a sparse search), a refinement process may be performed, for example, via a second template matching search around the match within a reduced range.

IntraTMP may be enabled for CUs with a size less than or equal to 64 pixels in width and height. The maximum CU size that qualifies for IntraTMP may be configurable. The use of IntraTMP may be signaled (e.g., at the CU level), for example, via a dedicated flag (e.g., if DIMD is not used for a current CU).

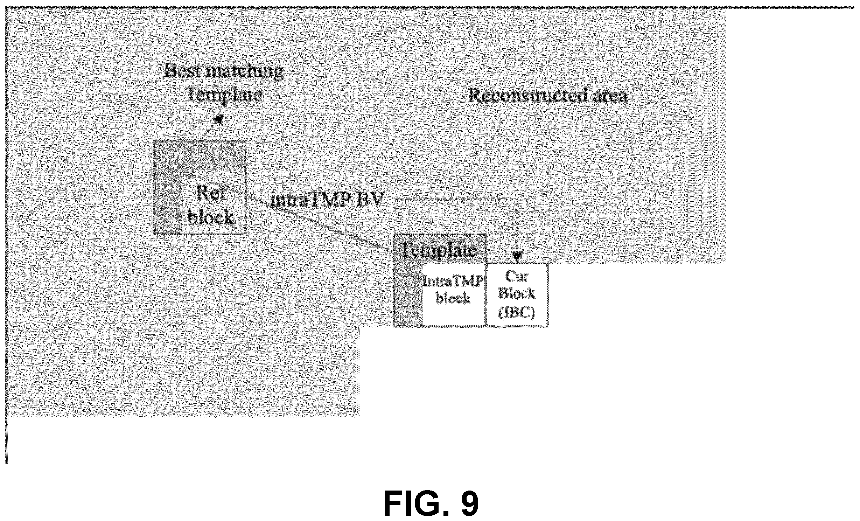

One or more block vectors (BVs) derived via IntraTMP may be used for an intra block copy (IBC) mode. For example, one or more stored IntraTMP BVs (e.g., derived based on neighboring blocks of a current block) along with one or more IBC BVs may be used as spatial BV candidates to construct an IBC BV candidate list, and a current IBC block may be coded based on the IBC BV candidate list, as illustrated in FIG. 9. The IntraTMP block vectors may be stored (e.g., in quarter-pel resolution) in an IBC block vector buffer. The IntraTMP block vectors may be used for IBC and/or history-based motion vector prediction (HMVP).

A video coding device (e.g., an encoder or a decoder) may perform template-based intra mode derivation (TIMD). With TIMD, a difference such as a sum of absolute transform differences (SATD) between the prediction and reconstruction samples of a template may be calculated, for example, for one or more intra prediction modes in MPMs (e.g., for each intra prediction mode in the MPMs) and/or one or more wide-angle modes (e.g., if above-right and/or bottom-left reference samples are available). A number of (e.g., the first two) intra prediction modes with the minimum SATD may be selected as the TIMD modes. These TIMD modes may be fused (e.g., based on a weighted average and/or after applying a position dependent intra prediction combination (PDPC)), and an intra prediction resulted from the fusion (e.g., a weighted intra prediction) may be used to code a current CU. A PDPC may be performed to derive the TIMD modes.

Related to the operations described above, the costs of selected modes (e.g., two selected modes) may be compared with a threshold value. A cost factor (e.g., having a value of 2) may be applied to determine if the following condition is true:

$$costMode2 < 2*costMode1$$

If this condition is true, the fusion may be applied; otherwise, one of the selected modes (e.g., only mode 1) may be used. The weights associated with the selected modes may be computed based on their respective SATD costs, for example, as

follows:

$$weight1 = costMode2 / (costMode1 + costMode2)$$

$$weight2 = 1 - weight1$$

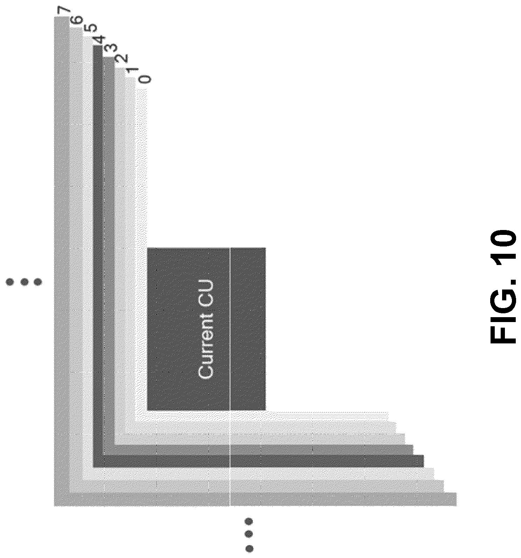

An extended multiple reference line (MRL) list may be constructed. The derivation of an MRL may involve selecting a line of reference samples for an intra predicted current block. This line of reference samples may include a line of reconstructed samples adjacent to the current block (e.g., on its top and left), and/or a line of samples farther away from the current block boundaries. The line of samples used for the intra prediction may be signaled via an MRL index (e.g., which may be coded in a video bitstream). The MRL may be extended to include more reference lines for intra prediction. For example, the extended MRL may include line indices {1, 3, 5, 7, 12} shown in FIG. 10. In examples (e.g., for TIMD), a subset of lines (e.g., the first two reference line candidates such as {1, 3} of FIG. 10) may be used instead of the full MRL candidate list.

A template-based multiple reference line intra prediction (TMRL) mode may combine reference lines and prediction modes and use a template matching method to construct a list of candidate combinations. An index to the candidate combination list may be coded to indicate which reference line and/or prediction mode may be used to code a current block. An MRL for a non-TIMD part may be replaced by the TMRL mode.

The TMRL mode may extend a reference line candidate list and/or an intra-prediction mode candidate list. For example, the extended reference line candidate list may include lines {1, 3, 5, 7, 12} in FIG. 10. Restrictions on a top CTU row may be unchanged. For example, the size of the intra-prediction mode candidate list may be set to 10. The construction of the intra-prediction-mode candidate list may be similar to that of MPM. A PLANAR mode may be excluded from the intra-prediction-mode candidate list. A DC mode may be added after the modes of one or more (e.g., 5) neighboring PUs and/or one or more DIMD modes (e.g., if they are not included). One or more angular modes with delta angles from $\pm1$ to $\pm4$ may be added. The precision of an angular prediction may be extended from 65 to 129. Non-adjacent positions may be added as candidates to construct the intra prediction candidate list. If neighboring or non-adjacent blocks are coded with an SGPM or a GPM mode, the intra modes of those blocks may be replaced by partitioning angles.

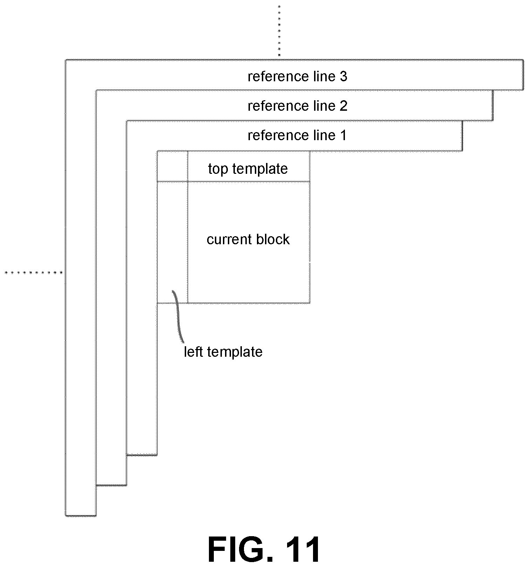

A TMRL candidates list may be constructed as follows. There may be multiple (e.g., 5x10=50) combinations of extended reference lines and allowed intra-prediction modes for a block. Since the extended reference line may start from reference line 1, the area covered by reference line 0 may be used for template matching. The SAD costs over a template area (e.g., as shown in FIG. 11) may be calculated between prediction samples (e.g., generated by 50 combinations) and reconstruction samples. A number of (e.g., 20) combinations with the least SAD cost may be selected in an ascending order to form the TMRL candidates list.

An index to the TMRL candidates list may be coded (e.g., instead of coding the reference lines and the intra mode directly) to indicate which combination of reference lines and prediction mode may be used to code the current block.

An extrapolation filter-based intra prediction mode (EIP) may be used to code a video block. The EIP may involve one or more of the following operations. Extrapolation filter coefficients may be derived from a neighboring reconstructed area of a current block or inherited from a previous EIP block. An extrapolation may be used to generate predicted signals from the top-left corner to the bottom-right corner within the current block. An intra prediction angle may be derived by analyzing the gradient of the predicted block, and a corresponding intra-mode may be used to select a multiple transform selection (MTS), numerical stochastic perturbation theory (NSPT), or low-frequency non-separable transform (LFNST) kernel for transformation.

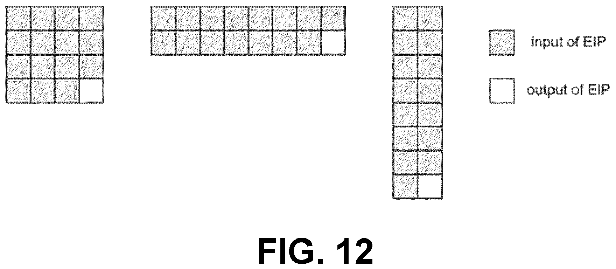

The application of EIP may be restricted to blocks with a size not greater than 32x32 and/or to the luma component only. FIG. 12 illustrates examples of EIP filter shapes that may be used. EIP filter coefficients for a current CU may be derived based on neighboring reconstructed pixels of the current CU and/or inherited from previously decoded blocks.

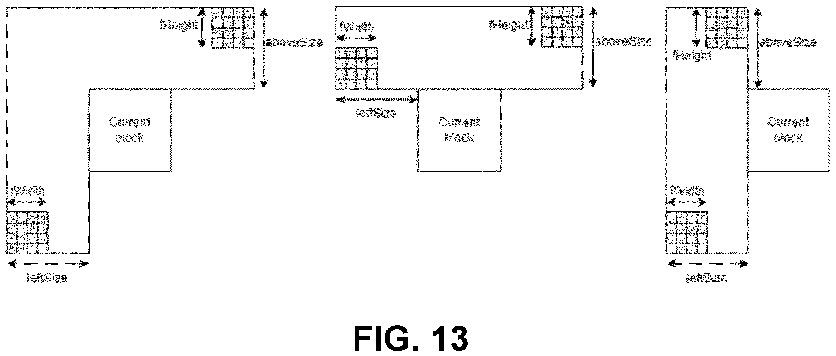

In examples, a decoder may decode relevant syntax elements to determine the type of a selected reconstructed area and the filter shape for a current block. FIG. 13 illustrates example types of reconstructed areas that may be used for EIP. A EIP selected filter may be applied by moving the filter in a selected reconstructed area horizontally or vertically with a certain step (e.g., a one-pixel step) to construct an autocorrelation matrix and/or a cross-correlation vector. EIP filter coefficients may be determined from the autocorrelation matrix and/or the cross-correlation vector.

The size of a reconstructed area may depend on the min(blockWidth, blockHeight) and a selected filter shape. For example, when the current block is an 8x16 block and the selected filter shape is 4x4, the aboveSize of a reconstructed area may be equal to min(8, 16) + 4 - 1 = 11, and the leftSize of the reconstructed area may be equal to min(8, 16) + 4 - 1 = 11.

EIP filters may be inherited. An EIP merge mode may be applied. Filter shapes and filter coefficients may be inherited from the previous decoded blocks with EIP or an EIP merge mode. A decoder may decode an EIP merge indication (e.g., flag) to decide whether a proposed merge mode is used when the current block uses the EIP mode. The decoder may decode a merge index if the EIP merge flag is true. An EIP merge list may include spatial adjacent and non-adjacent candidates, temporal candidates, and/or history candidates. The EIP merge list may include multiple (e.g., up to 12) candidates. The size of the EIP merge list may be reduced (e.g., 6 or fewer candidates) via a reordering process, which may be performed based on the SAD cost measured on a 1-column and 1-row template. In the SAD calculation, predictions of the template area by EIP filters may be generated from (e.g., only from) reconstructed samples (e.g., neighboring and template samples). This may allow the EIP filters to be applied in parallel rather than sequentially.

EIP may be performed based on spatial adjacent candidates, temporal candidates, non-adjacent candidates, shifted temporal candidates, and/or history candidates. The positions and/or inclusion order of these candidates may be determined.

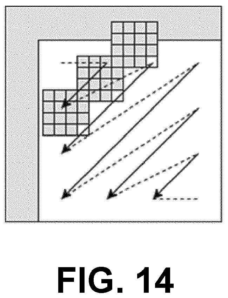

FIG. 14 illustrates an example of using EIP to generate prediction values for a current block from the top-left position to the bottom-right position by a diagonal prediction order. The calculation of the prediction values may be performed based on the following:

$$pred_{(x,y)} = \sum_{i=0}^{14} (c_i \times t_{(x-offsetX_i, y-offsetY_i)})$$

where $pred_{(x,y)}$ may represent the predicted value at (x, y) of the current block, $c_i$ may represent the $i^{th}$ coefficient of a selected EIP filter, the index of the coefficients may be from 0 to 14, $t_{(x-offsetX_i, y-offsetY_i)}$ may represent a reconstructed or a predicted value used for the current position's prediction, and $offsetX_i$ and $offsetY_i$ may represent the position offsets to the current position.

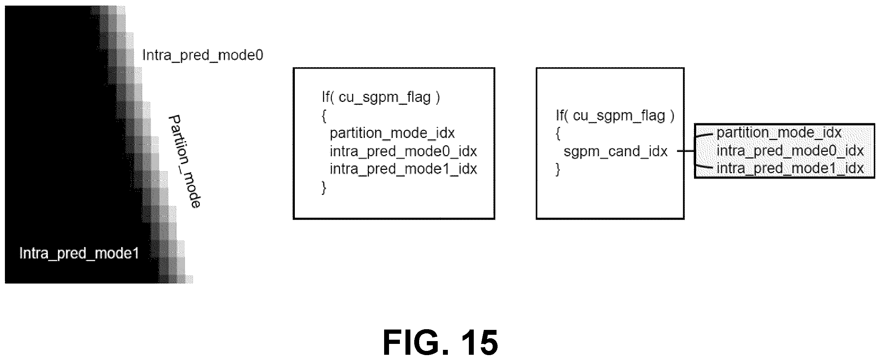

A spatial geometric partitioning mode (SGPM) may be used to predict a coding block. SGPM may be considered an intra mode and may resemble the inter coding tool(s) of a geometric partitioning mode (GPM). The two prediction parts may be generated from an intra predicted process. In SGPM, a candidate list may be built with each entry containing a partition split and two intra prediction modes, as illustrated in FIG. 15. One or more (e.g., 26) partition modes and one or more (e.g., three) intra prediction modes may be used to form the combinations. The length of the candidate list may be set to 16. The selected candidate index may be signaled.

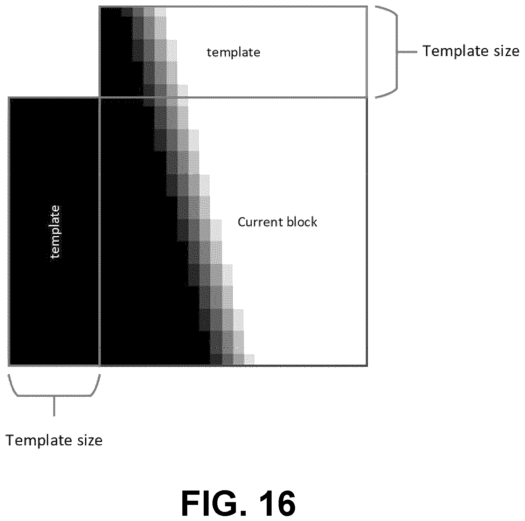

FIG. 16 illustrates an example SGPM template that may be used to reorder an SGPM candidates list. The SAD between the prediction and reconstruction of the template may be used for ordering the candidates. The template size may be fixed to one.

For a partition mode (e.g., each partition mode), an IPM list may be derived (e.g., including a TIMD-derived mode, horizontal mode, and vertical mode). The IPM list size may be set to three. In the list, a TIMD-derived mode may be replaced by one or more (e.g., two) derived modes with horizontal and vertical orientations.

The SGPM mode may be applied with a restricted block size (e.g., $4 \leq width \leq 64$ and $4 \leq height \leq 64$, where $width < height * 8$, $height < width * 8$, and $width * height \geq 32$.

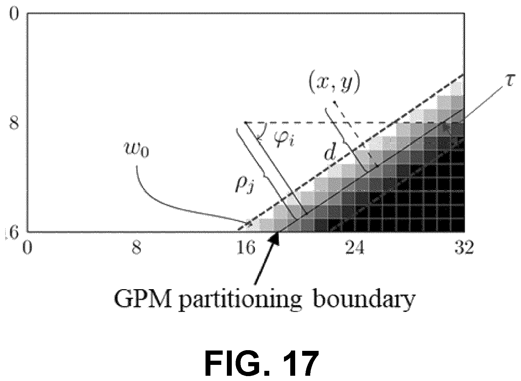

A PPS (Picture Parameter Set) flag may be coded to indicate whether no blending of two intra predictions is allowed. If this PPS flag is set to false, the following adaptive blending may be used for spatial GPM, where blending depth $\tau$ shown in FIG. 17 may be derived as follows:

If min(width, height)==4, 1/2 $\tau$ may be selected

else if min(width, height)==8, $\tau$ may be selected

else if min(width, height)==16, 2 $\tau$ may be selected

else if min(width, height)==32, 4 $\tau$ may be selected

else, 8 $\tau$ may be selected.

If the PPS flag is set to true, 1/4 $\tau$ may be used for spatial GPM coded blocks such that no blending may be used if an SGPM block has a partition angle completely horizontal or vertical, and/or if a much narrower blending width is used when the SGPM block has other partition angles. The PPS flag may be set to true for screen content coding.

IntraTMP may be performed based on one or more merge candidates. With such a merge-based approach, an IntraTMP search may consider candidate block vectors associated with neighboring blocks or PUs of a current CU that are coded in an IBC mode or an IntraTMP mode. These candidates may be referred to as IntraTMP merge candidates and may be used to improve the outcome of IntraTMP since the neighboring blocks may have correlating properties with the current block.

The merged-based IntraTMP may consider BV(s) derived from an IntraTMP search (e.g., a sparse search and/or a refinement search) as well as BV(s) derived outside an IntraTMP search range (e.g., as depicted in FIG. 5).

It should be noted that, during an IBC merge mode, IntraTMP block vectors may be used as IBC merge candidates. IBC merge candidates, however, may or may not be used as IntraTMP block vectors.

Template matching costs may be used to rank IntraTMP candidates including already-computed candidates such as those derived from a sparse search.

Multiple (e.g., up to 25) local and non-local blocks or PUs may be checked to determine a merge candidate. The processing order of these neighboring PUs may be the same as (e.g., similar to) an IBC merge mode. If a block vector is found within the local or non-local neighborhood of a current CU, the block vector may be added to an IntraTMP candidates list.

The template costs associated with IntraTMP merge candidates may be obtained in the same way as for other IntraTMP candidates. The merge candidates may be ranked together with the other IntraTMP candidates. A number of (e.g., top 30) candidates may be selected for further refinement.

If a neighboring PU or block is coded in a bi-IBC mode, two BVs may be included in the IntraTMP merge candidates list. Otherwise, a uni-IBC BV may be added to the IntraTMP merge candidates list.

If a neighboring PU or block is coded in an IntraTMP mode and intra_tmp_idx > 0, a BV selected for the neighboring PU and an IntraTMP candidate with the smallest template matching cost may be added to the IntraTMP merge candidates list. If intra_tmp_idx is equal to 0, the BV selected for the neighboring PUF and BV with the smallest cost may be the same, so only one of those candidates may be added to the IntraTMP merge candidates list.

In examples, N out of M available merge candidates may be added to the IntraTMP merge candidates list if M>N. In examples, merge candidates outside the IntraTMP search range may be prioritized.

In examples, up to 50 IntraTMP merge candidates may be selected. In examples, up to 10 candidates may be used, in which case 10 candidates may be tested and compared with other candidates.

TIMD modes from previously TIMD-coded blocks may be inherited for a current block. For this approach, adjacent and non-adjacent spatial neighboring blocks of the current block may be scanned. If a scanned block is coded in TIMD or a TIMD merge mode, then the block's TIMD information (e.g., prediction modes, a fusion flag, fusion weights, and/or wide-angle conditions of the TIMD mode) may be added to a TIMD merge candidates list (e.g., up to 10 TIMD pairs may be added to the list).

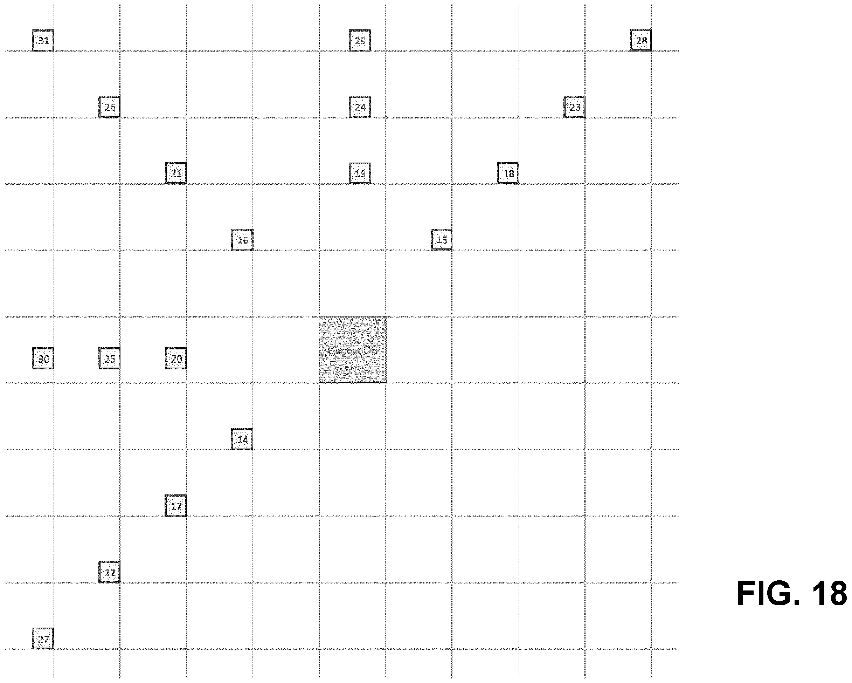

FIG. 18 illustrates examples of non-adjacent spatial neighboring blocks that may be used in TIMD merge list generation. Table 1 below shows an example of a TIMD merge candidates list.

Table 1 - Example of an initial TIMD merge candidate list

| Cand | Intra modes | Fusion weights |
|---|---|---|
| 1 | $(IPM_{1,1}, IPM_{1,2})$ | $(W_{1,1}, W_{1,2})$ |
| 2 | $(IPM_{2,1}, IPM_{2,2})$ | $(W_{2,1}, W_{2,2})$ |
| 3 | $(IPM_{3,1}, IPM_{3,2})$ | $(W_{3,1}, W_{3,2})$ |
| . <br> . | . <br> . | . <br> . |
| 10 | $(IPM_{10,1}, IPM_{10,2})$ | $(W_{10,1}, W_{10,2})$ |

After TIMD merge candidates are determined (e.g., to form a TIMD merge candidates list), the merge candidates may be sorted, for example, based on their respective SATD costs with a template of the current block. The SATD costs of paired TIMD modes may be normalized based on their associated fusion weights. For example, if a merge candidate has two intra modes (IPM1, IPM2) with fusion weights (W1, W2), the candidate's cost may be calculated as follows:

$$\text{Cost} = (\text{SATD}(IPM1) * W1 + \text{SATD}(IPM2) * W2) >> \text{shift}$$

The template size and/or template cost calculation aspects of the TIMD merge mode may be the same as in the TIMD mode.

After the TIMD merge candidates are sorted, one or more (e.g., two) best candidates from the list may be selected for encoder RDO. For example, on the encoder side, the selected (e.g., two) candidates may be passed to SATD-based sorting and the best performing candidate among the selected ones may be selected and used in full RD.

The use of the TIMD merge mode may be signaled (e.g., via a CABAC coded PU level flag). The TIMD merge mode may be used as a sub-mode of the TIMD mode. Moreover, if the TIMD merge mode is enabled, a CABAC coded index may be signaled to indicate whether the first candidate from a TIMD merge candidates list the second candidate from the list is used.

A DIMD merge mode may merge the histogram of gradients (HoG) of neighboring blocks coded in the DIMD mode to derive the DIMD information of a current block. The DIMD information of multiple (e.g., up to 13) blocks or CUs in the surrounding areas of a current CU may be used to derive the merged HoG (MHoG) of the current CU. The MHoG may be used to derive intra prediction modes and weights, as in a non-merge-based DIMD mode. The directional modes and/or the respective weights corresponding to a number of (e.g., five) highest amplitudes in the MHoG may be selected, and the corresponding predictors may be blended (e.g., based on the weights) as in the non-merge-based DIMD mode.

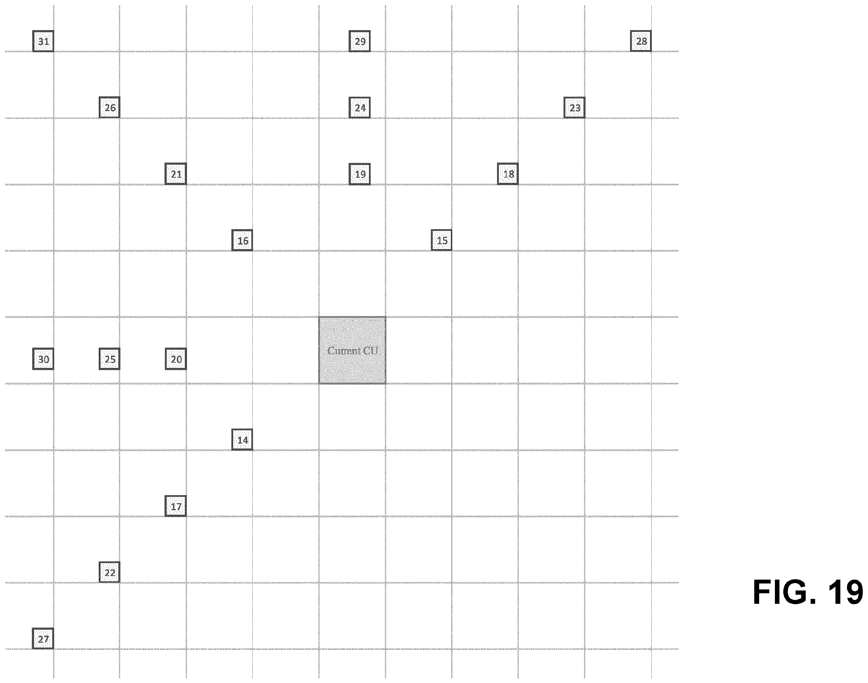

In examples, the DIMD merge mode may be extended to include up to 31 CUs previously coded in the DIMD mode to derive the MHoG of the current CU. FIG. 19 illustrates an example of using non-adjacent spatial candidates in the DIMD merge mode.

A DIMD merge list may be constructed based on the DIMD information of one or more neighboring blocks. For example, the DIMD merge list may use information from one or more of the following candidates: DIMD information from spatial neighbors (as shown in FIG. 5), DIMD information from non-adjacent neighbors (as in FIG. 19), or DIMD information derived from an MHoG.

One or more (e.g. two) redundancy checks (pruning stage) may be applied to a DIMD merge candidate. A first check may compare the DIMD information of the merge candidate with that of other DIMD merge candidates, and a second check may compare the DIMD information of the merge candidate with that derived from the current block. The DIMD merge candidate may be added to the DIMD merge candidates list if its associated DIMD information is different from that of DIMD merge candidates already present in the list and from the DIMD information of the current block.

One or more indications (e.g., two additional flags) may be signaled, conditioned on a DIMD flag (e.g., the DIMD merge mode may be considered as a sub-mode of DIMD). These indications may include a DIMD merge mode indication (e.g., flag) indicating the use of the DIMD merge mode and/or a DIMD merge mode index indicating the DIMD merge candidate used to derive the DIMD information of current block.

An encoder may evaluate DIMD merge candidates. DIMD merge may be used/enabled if a current block has at least one adjacent or non-adjacent neighboring block coded with DIMD or DIMD merge mode.

If the DIMD merge mode is available for the current block, a DIMD merge candidates list may be derived at the encoder and decoder sides. On the encoder side, a (e.g., each) candidate may be evaluated using a Hadamard pass. The candidate may be put in an RDO loop if the associated Hadamard-based cost satisfies a requirement.

Forward low frequency non-separable transform (LFNST) may be applied. For example, forward LFNST may be applied after discrete cosine transform2 (DCT2) transform for one or more intra coded blocks. In the decoder side, inverse transform may be applied, e.g., before the inverse DCT2 transform. The transform stage described herein may be associated with coding gain (e.g., high coding gain).

One or more transform stages (e.g., a transform stage) may be added, e.g., named non-separable primary transform (NSPT). The added transform stage may replace DCT2-LFNST stage, e.g., where a non-separable transform (e.g., a single non-separable transform) is used. Replacing DCT2-LFNST stage described herein may be allowed (e.g., only allowed) for a small block, e.g., since non-separable transform for large blocks may need huge memory and/or computation complexity.

Multiple transform selection (MTS) may be used. For MTS, discrete sine transform7 (DST7) and DST8 (e.g., only DST7 and DCT8) transform kernels may be utilized. DST7 and DST8 transform kernels may be used for intra and inter coding.

Additional primary transforms including DCT5, DST4, DST1, and identity transform (IDT) may be employed. Also, an MTS set may be based on the size of transform unit (TU) and/or intra mode information. For blocks predicted via Intra Template Matching Prediction (IntraTMP), Decoder Side Intra Mode Derivation (DIMD) process may be used on the prediction block, e.g., to derive an intra mode that is used for transform selection. For example, a horizontal gradient and a vertical gradient may be calculated for a predicted sample, e.g., to build a Histogram of Gradients (HoG). The intra prediction mode with histogram amplitude values (e.g., the largest histogram amplitude values) may be used to the MTS transform set.

16 different TU sizes may be considered. For a TU size, one or more (e.g., 5) different classes may be considered, e.g., based on intra-mode information. For a class, 1, 4, and/or 6 different transform pairs may be considered. A number of intra MTS candidates may be selected (e.g., adaptively selected between 1, 4, and 6 MTS candidates). For example, the number of intra MTS candidates may be adaptively selected based on the sum of absolute value of transform coefficients. The sum may be compared against one or more thresholds (e.g., the two fixed thresholds). The compared sum may be used to determine the total number of allowed MTS candidates:

1 candidate: sum <= th0

4 candidates: th0 < sum <= th1

6 candidates: sum > th1

A total of 80 different classes may be considered. Some of the different classes may share similar (e.g., exactly same) transform set. 58 entries (e.g., less than 80 unique entries) may be in the resultant lookup table (LUT).

For angular modes, a joint symmetry over TU shape and intra prediction may be considered. An intra prediction mode i (i > 34) with a TU shape A×B may be mapped to the same class corresponding to the mode j = (68 - i) with a TU shape B×A. For a transform pair, the order of the horizontal and vertical transform kernel may be swapped. For example, for a 16x4 block with mode 18 (e.g., horizontal prediction) and/or a 4x16 block with mode 50 (e.g., vertical prediction) may be mapped to the same class. The vertical and horizontal transform kernels may be swapped. For the wide-angle intra prediction modes, the angular mode (e.g., the nearest conventional angular mode) may be used for the transform set determination. For example, mode 2 may be used for one or more (e.g., all) modes between -2 and -14. Similarly, mode 66 may be used for mode 67 to mode 80.

Implicit MTS may be used. For example, implicit MTS may specify a transform selection mode, e.g., without an MTS index signaling in video data (e.g., coded bitstream). If implicit MTS is on, the transform type for a given transform unit may be derived from a block shape. The implicit MTS mode may be useful for an encoder (e.g., fast encoder implementation). For example, a rate distortion optimized choice of primary transform may be skipped (e.g., may not be necessary).

In implicit MTS mode, the primary transform may be derived as following:

trTypeHor = (4 <= tuWidth <= 16) ? DST7 : DCT2

trTypeVer = (4 <= tuHeight <= 16) ? DST7 : DCT2

For example, in a given direction (e.g., horizontal and/or vertical), the 1D transform used may be DST7. The TU width may be between 4 and 16 included. And the 1D transform used may be DCT2, e.g., otherwise.

The usage of implicit MTS (e.g., in comparison to explicit MTS) may be signaled at a sequence level, in Sequence Parameter Set (SPS). The explicit MTS described herein may be where MTS index is coded in video data (e.g., the bitstream).

Inter MTS optimization may be used. For the MTS of inter-coded CUs, four candidates: {(DST7, DST7), (DST7, DCT8), (DCT8, DST7), (DCT8, DCT8)} may be used for one or more (e.g., every) CUs. For the larger resolution sequences (e.g., width > 1080), maximum CU size for inter-MTS usage may be set to 32 (e.g., inter-MTS is used for CU with width <=32 and height <=32). For the remaining sequences (e.g., smaller resolution), maximum CU size for inter-MTS usage may be set to 16. For 4-pt, 8-pt, and/or 16-pt transforms, one or more adaptive multiple transform cores (e.g., DST-7 and/or DCT-8) may be replaced with separable Karhunen-Loeve transforms (KLTs).

Low frequency non-separable transforms (LFNSTs) (e.g., secondary transforms that may be applied after one or more primary transform have been applied) and non-separable primary transforms (NSPTs) may be performed by video coding devices herein. The LFNST may include a number of LFNST sets (S) and candidates (C) extended to S=35 and C=3. The LFNST set (IfnstTrSetIdx) for a given intra mode (predModeIntra) may be derived according to the following formula:

For predModeIntra < 2, IfnstTrSetIdx is equal to 2

IfnstTrSetIdx = predModeIntra, for predModeIntra in [0,34]

IfnstTrSetIdx = 68 – predModeIntra, for predModeIntra in [35,66]

Three different kernels, LFNST4, LFNST8, and LFNST16, may be defined to indicate LFNST kernel sets, which may be applied to 4xN/Nx4 (N≥4), 8xN/Nx8 (N≥8), and MxN (M, N≥16), respectively. The kernel dimensions may be specified by:

(LFSNT4, LFNST8*, LFNST16*) = (16x16, 32x64, 32x96)

The forward LFNST may be applied to top-left low frequency region, which may be called Region-Of-Interest (ROI). If LFNST is applied, primary-transformed coefficients that exist in the region other than ROI may be zeroed out.

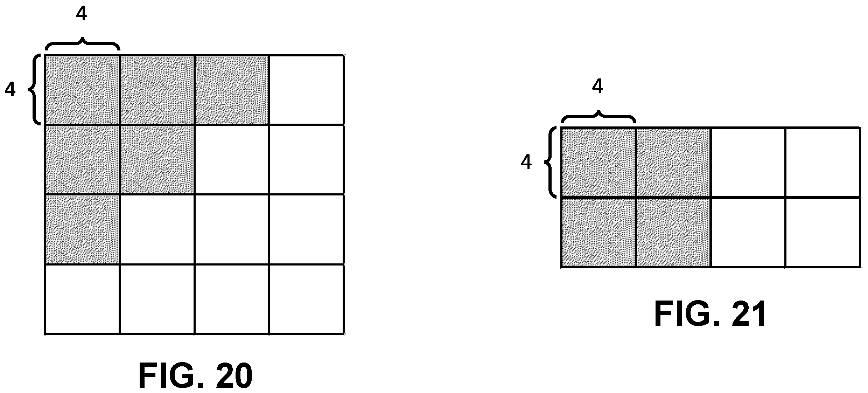

FIG. 20 illustrates an example of an ROI for LFNST16. LFNST 16 may include six 4x4 sub-blocks, which may be consecutive in scan order (zigzag-scan). Since the number of input samples are 96, transform matrix for forward LFNST16 may be Rx96. R may be chosen to be 32. 32 coefficients (two 4x4 sub-blocks) may be generated from forward LFNST16 accordingly, which may be placed in coefficient scan order as shown in FIG. 20.

FIG. 21 illustrates an example of an ROI for LFNST8. The forward LFNST8 matrix may be Rx64. R may be chosen to be 32. The generated coefficients may be located in the same manner as with LFNST16.

The mapping from intra prediction modes to these sets is shown below in Tables 2A and 2B.

Table 2A: Mapping of intra prediction modes to LFNST set index

| Intra pred. mode | -14 | -13 | -12 | -11 | -10 | -9 | -8 | -7 | -6 | -5 | -4 | -3 | -2 | -1 | 0 |
|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 |
| Intra pred. mode | 18 | 19 | 20 | 21 | 22 | 23 | 24 | 25 | 26 | 27 | 28 | 29 | 30 | 31 | 32 |
| LFNST set index | 18 | 19 | 20 | 21 | 22 | 23 | 24 | 25 | 26 | 27 | 28 | 29 | 30 | 31 | 32 |
| Intra pred. mode | 50 | 51 | 52 | 53 | 54 | 55 | 56 | 57 | 58 | 59 | 60 | 61 | 62 | 63 | 64 |
| LFNST set index | 18 | 17 | 16 | 15 | 14 | 13 | 12 | 11 | 10 | 9 | 8 | 7 | 6 | 5 | 4 |

Table 2B: Mapping of intra prediction modes to LFNST set index

| Intra pred. mode | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| LFNST set index | 1 | 2 | 3 | 4 | 5 | 6 | 7 | 8 | 9 | 10 | 11 | 12 | 13 | 14 | 15 | 16 | 17 |
| Intra pred. mode | 33 | 34 | 35 | 36 | 37 | 38 | 39 | 40 | 41 | 42 | 43 | 44 | 45 | 46 | 47 | 48 | 49 |
| LFNST set index | 33 | 34 | 33 | 32 | 31 | 30 | 29 | 28 | 27 | 26 | 25 | 24 | 23 | 22 | 21 | 20 | 19 |
| Intra pred. mode | 65 | 66 | 67 | 68 | 69 | 70 | 71 | 72 | 73 | 74 | 75 | 76 | 77 | 78 | 79 | 80 | |
| LFNST set index | 3 | 2 | 2 | 2 | 2 | 2 | 2 | 2 | 2 | 2 | 2 | 2 | 2 | 2 | 2 | 2 | |

LFNST and non-DCT2 primary transform may be used (e.g., mutually exclusive).

LFNST may be used (e.g., may only be used) for block coded with DCT2-DCT2 as a transform pair (e.g., the primary transform pair in some video coding tools).

In exemplary decoding process, LFNST index may be decoded (e.g., decoded first from video data, such as the bitstream). If LFNST index of considered CU is non-zero, the MTS index may be skipped (e.g., may not be decoded) and DCT2-DCT2 may be inferred as the transform pair (e.g., the primary transform pair) of considered block (e.g., corresponding to MTS index equal to 0).

One or more conditions (e.g., additional conditions) for MTS index to be decoded and not inferred to 0, may include the one or more of the following: the transform skip indication (e.g., such as a flag), that is decoded before one or more transform coefficients, may be equal to false; the Last Significant decoded coefficient position in scanning order may be at least 1; the coding block (e.g., coding unit) may not be in intra sub-partition (ISP) mode or sub-block transform (SBT) mode; and/or MTS may be enabled with respect to the CU coding mode (e.g., Intra mode and/or Inter mode) and/or CU size.

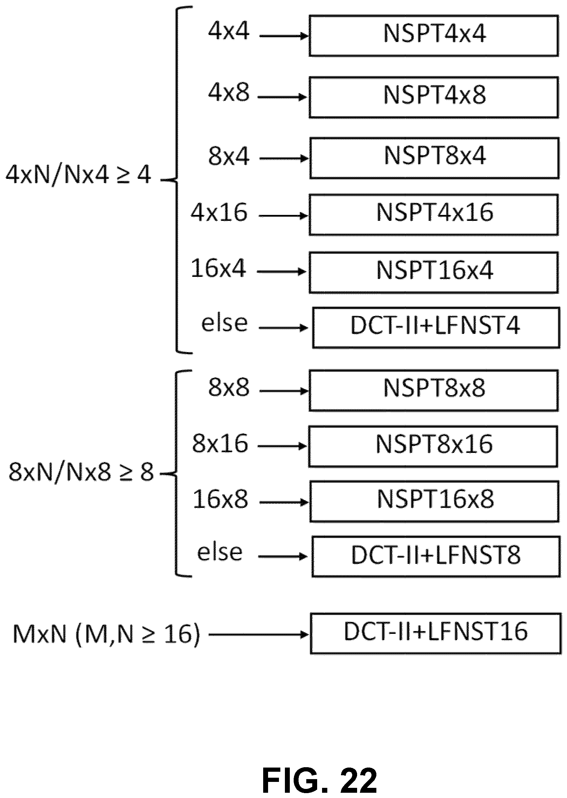

FIG. 22 illustrates an example NSPT that replaces the two stages of transform (DCT2-LFNST) by a non-separable transform (e.g., a single non-separable transform). This may (e.g., may only) be allowed for small blocks.

One or more (e.g., all) NSPTs may include 35 sets and 3 candidates (e.g., similar to the current LFNST). The kernels of NSPT may have at least one of the following shapes: NSPT4x4: 16x16; NSPT4x8/NSPT8x4: 32x20; NSPT8x8: 64x32; NSPT4x16/NSPT16x4: 64x24; or NSPT8x16/NSPT16x8: 128x40. Therefore, 12, 32, 40, and 88 coefficients may be zeroed-out using NSPT4x8/NSPT8x4, NSPT8x8, NSPT4x16/NSPT16x4, and NSPT8x16/NSPT16x8, respectively.

A merge mechanism, such as those employed by some intra coding modes (e.g., EIP, DIMD, TIMD, IntraTMP, IBC) may be used as a sub-mode of a coding mode. Merge mechanisms may be directed towards derivation of intra prediction mode parameters (e.g., in the case of intra CUs). Some signaling rate may be saved using merge mechanisms, for example, by deriving a set of information from a merge candidate selected in a merge candidate list. Compression efficiency may be improved by extending the set of information derived through a merge mechanism, for example, in the case of intra CUs.

Primary and secondary transforms used for an intra CU may be explicitly signaled or implicitly derived (e.g., based on block size).

An intra merge mechanism may be used to derive transform related information, for example, from previously coded CUs. The set of data being derived through an intra-dedicated merge mechanism may be extended to some transform parameter(s).

An intra-dedicated merge mechanism may be extended, for example, by applying one or more of the following characteristics.

If a current CU is coded or decoded according to an intra mode, and has a non-zero residual block, the primary and/or secondary transform type used for this CU may be stored.

When a new CU is coded or decoded according to an intra mode (e.g., in the merge sub-mode of the intra mode), a merge candidate list may be constructed based on adjacent and non-adjacent CUs coded in the intra mode. A merge candidate may be selected from the constructed merge candidate list. For example, at the decoder side a merge candidate may be selected based on (e.g., according to) a merge index (e.g., received from a video bitstream). The selected merge candidate may be used to derive transform related parameters, for example, in addition to an intra prediction mode and intra prediction mode parameter(s). For example, the derived transform related parameters may be the primary transform pair. For example, the derived transform related parameters may be the primary transform pair and the secondary transform. The derived transform related parameters may be the secondary transform (e.g., only secondary transform related parameters may be derived with a merge mechanism). The derived transform related parameters may be used to signal (e.g., conditionally signal) the transform used for a current CU. For example, a reduced set of possible transforms for a current CU may be normatively derived from a merge candidate. Such derivation may reduce the transform signaling cost.

In examples, if a merge candidate's primary transform pair is not DCT2-DCT2, the selected merge candidate's primary transform pair and DCT2-DCT2 may be selected as the candidate transform for the current CU.

The transform-related information merge derivation (e.g., as described herein) may be used for one or more of: DIMD merge mode, TIMD merge mode, EIP or IntraTMP merge candidates. For example, when the DIMD information is derived from an adjacent or non-adjacent merge candidate, that transform related information may be (e.g., also) derived from that candidate.

The transform-related information storing (e.g., as described herein) may be performed when a CU is coded in IBC mode (e.g., in addition to being used for IntraTMP merge candidate derivation). Stored block vector (BV) and transform information may be jointly inherited, for example, in a later intra CU coded in IntraTMP mode (e.g., as IntraTMP is (e.g., also) a block-vector based prediction mode).

The transform-related information merge derivation (e.g., as described herein) may be used for EIP inheritance.

The transform-related information merge derivation (e.g., as described herein) may be used in the context of a unified intra merge mechanism.

Transform-related information for each candidate may be used to enrich a TIMD intra prediction mode. Table 3 shows an example enriched set of merge information. As shown in Table 3, TIMD related parameters (e.g., intra modes and fusion weights) may be attached to a (e.g., each) merge candidate (e.g., in a merge candidate list). Transform information may (e.g., also) be attached to a (e.g., each) candidate. For example, transform information may be attached to a primary transform pair (e.g., noted in Table 3 as PTh_i, PTv_i, where i may be the merge candidate index) and, if applicable, a secondary transform identifier (e.g., noted in Table 3 as ST_i, where i may be the merge candidate index). If a primary transform pair is different from DCT2-DCT2, no secondary transform may be attached to the considered candidate (e.g., since LFNST/NSPT may (e.g., only) be applied when the MTS index is 0).

Table 3: proposed enriched Initial TIMD merge list including transform related information for each candidate

| Candidate | Intra modes | Fusion weights | Transform type (Primary transform pair, Secondary transform type) |
|---|---|---|---|
| 1 | $(IPM_{1,1}, IPM_{1,2})$ | $(W_{1,1}, W_{1,2})$ | $(PTh_1, PTv_1, ST_1)$ |
| 2 | $(IPM_{2,1}, IPM_{2,2})$ | $(W_{2,1}, W_{2,2})$ | $(PTh_2, PTv_2, ST_2)$ |
| 3 | $(IPM_{3,1}, IPM_{3,2})$ | $(W_{3,1}, W_{3,2})$ | $(PTh_2, PTv_2, ST_2)$ |
| . . | . . | . . | |
| 10 | $(IPM_{10,1}, IPM_{10,2})$ | $(W_{10,1}, W_{10,2})$ | $(PTh_{10}, PTv_{10}, ST_{10})$ |

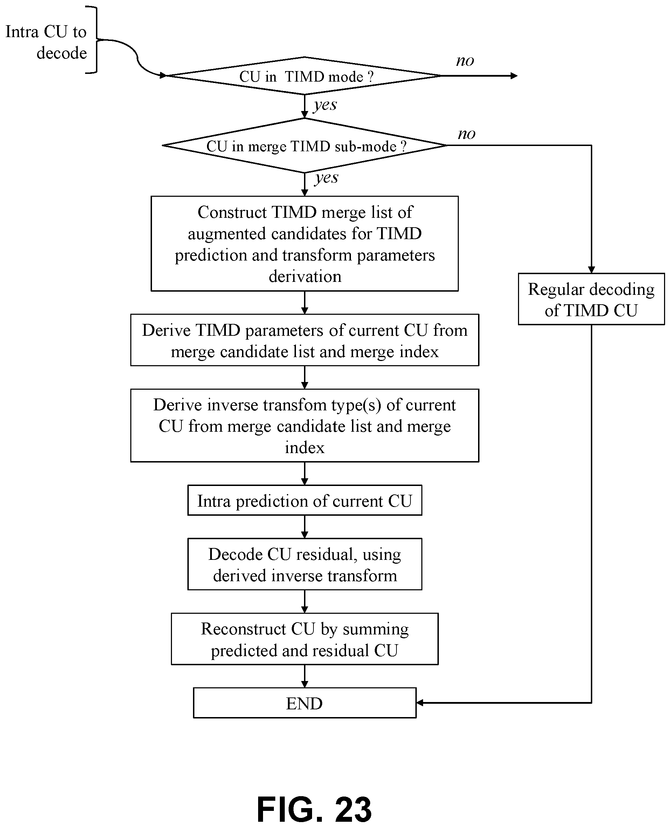

FIG. 23 illustrates an example CU decoding method using an enriched TIMD merge mode. As shown in FIG. 23, the input to the process may be, for example, an intra CU to decode.

At 1, the decoder may check if the current CU (e.g., the input intra CU) is coded in a TIMD intra mode. If the current CU is not coded in a TIMD intra mode, a different decoding method may be performed on the current CU (e.g., the example in FIG. 23 may end).

If the current CU is in TIMD mode, at 2, the decoder may proceed to check if the current CU is in TIMD merge sub-mode.

If the current CU is in TIMD merge sub-mode, at 3 a list of TIMD merge candidates may be constructed. A (e.g., each) candidate in the list of TIMD merge candidates may include TIMD information and transform related information (e.g., as shown in Table 3). For example, the TIMD merge list of augmented candidates for TIMD prediction and/or transform parameters derivation may be constructed.

If the current CU is not in TIMD merge sub-mode, at 4 regular TIMD CU decoding may be performed.

At 5, the selected merge candidate for the current CU may be obtained, for example, based on the constructed merge candidate list and on a merge index (e.g., obtained from a video bitstream). TIMD prediction information, such as TIMP parameters, may be derived based on selected merge candidate. For example, TIMD parameters of the current CU may be derived based on the merge candidate list and the merge index.

At 6, the primary and/or secondary transform type of the current CU may be derived for the current CU, for example, based on the transform related information associated with (e.g., attached to) the selected merge candidate. For example, inverse transform type(s) of the current CU may be derived based on the merge candidate list and/or merge index.

In examples, a primary transform (e.g., only a primary transform) may be derived. For example, the primary transform of the current CU may be set equal to the primary transform of selected merge candidate.

In examples, the primary transform of the current CU may be set equal to the primary transform of selected merge candidate based on (e.g., according to) a flag decoded from the bitstream. For example, if the decoded flag is 0, DCT2-DCT2 may be assigned to the current CU as the primary transform. For example, if the decoded flag is not 0, the primary transform pair of the selected merge candidate may be assigned to the current CU.

In examples, the inherited transform information may be used to determine a subset of primary transform candidates for the current CU. A decoded primary transform type syntax element (e.g., comparable to a MTS index) may be used to determine which primary transform in the subset of primary transform candidates for the current CU should be (e.g., is) used for the current CU.

In examples, the secondary transform (e.g., only a secondary transform) may be derived. For example, the secondary transform of the current CU may be set equal to the secondary transform of selected merge candidate. This derivation may reduce the coding rate of the primary syntax element (e.g., compared to some applications of the LFNST index).

In examples, the inherited transform information may be used to determine a subset of secondary transform candidates for the current CU. A decoded secondary transform type syntax element (e.g., comparable to the LFNST index) may be used to determine which secondary transform in the subset of secondary transform candidates for the current CU may be (e.g., is) used for the current CU. This derivation may reduce the coding rate of the secondary syntax element (e.g., compared to some applications of the LFNST index).

In examples, the secondary transform (LFNST) or non-separable primary transform (NSPT) related information derived from a candidate may be included in the secondary or NSPT transform set from which the secondary or NSPT transform of current block is selected. In some examples (e.g., Multiple Transform Set Selection (MTSS)), 2 candidates of transform sets may be considered, and the transform set selected for a current block may be explicitly signaled. A (e.g., each) candidate transform set may be built based on the intra prediction mode of the current block and/or some other intra prediction modes, e.g. given by DIMD histogram of gradients of TIMD-based intra mode determination. The transform related information that may be inherited from a merge candidate may include the secondary transform set from which the secondary transform of the current block may be selected. The selected secondary/NSPT transform may then be explicitly signaled as one of the secondary/NSPT transform belonging to this derived secondary transform set. A reduced coding rate associated to the signaling of the LFNST/NSPT transform set used for the current block may be achieved.

In examples, Virtual Intra Prediction Mode (VIPM) that is derived based on a gradient analysis inside the previously reconstructed block corresponding to a (e.g., each) merge candidate, may be obtained. The multiple transform set used for the current block may be derived from this VIPM, for example, enabling reducing the signaling cost of the LFNST/NSPT transform set used for the current block.

At 7, the current CU may be predicted based on (e.g., according to) an enhanced TIMD prediction mode, for example, with inherited TIMD prediction parameters. For example, intra prediction of the current CU may be performed.

At 8, the residual block (e.g., residual coefficient) associated with the current CU may be decoded. For example, the CU residual may be decoded using the derived inverse quantization and/or inverse transform. Inverse transform may be applied, for example, using the primary and/or secondary transform types obtained at 6.

At 9, the current CU may be reconstructed, for example, by adding the predicted block (e.g., from 7) and the residual block (e.g., from 8). The current CU may therefore be decoded based on the enriched TIMD merge mode.

In examples, a redundancy check may be performed, for example, to ensure that no duplicate candidates exist in the final merge candidate list. For example, the redundancy check may be performed during or after the construction of the merge candidate list. A redundancy check (e.g., on the merge candidate list) may maximize diversity among merge candidates, for example, to optimize compression performance.

A redundancy check may be performed, for example, when (e.g., each time) a candidate is to be added to the merge candidate list. For example, a check that the candidate is not equivalent to any candidate already present in the list may be performed. The candidate may (e.g., only) be added if the candidate is not equivalent to any candidate already present in the merge candidate list (e.g., if the candidate is unique).

In examples, the merge candidate list may be reordered (e.g., according to a ranking of the candidates). For example, the merge candidate list may be reordered once the list of merge candidates is constructed (e.g., construction is complete). For example, the merge candidate list may be reordered before selecting a merge candidate (e.g., based on the received merge index). The reordering process may comprise ranking candidates (e.g., ordering and/or prioritizing candidates), for example, based on (e.g., according to) a respective template matching cost.

In examples, the reordering may (e.g., only) concern the prediction modes (e.g., intra prediction modes). For example, the template matching cost may be computed as the distortion between reconstructed samples and predicted samples. For example, a (e.g., each) prediction mode may have a respective template matching cost. The template matching cost may be computed in a template area, for example, containing samples on the top and/or on the left of current block.

In examples, the reordering may concern the prediction modes (e.g., intra prediction modes) and transforms. For example, the ranking may (e.g., also) apply to both intra prediction modes and transforms. The ranking may be based on a criteria of maximum energy compaction capability of the residual signal, for example, after prediction and transform are performed.

The criteria of maximum energy compaction capability may be determined for a (e.g., each) prediction mode and transform by performing one or more of the following. The prediction may be performed in a rectangular sub-part part of a template. The residual signal may (e.g., then) be computed, for example before the transform may be performed (e.g., resulting in a transform residual). A computation (e.g., quantization) may (e.g., optionally) be performed on the transform residual. The energy compactness of the obtained transform residual may be measured. For example, the sum of absolute transform coefficient values may be used as the energy compactness in the transform domain. For example, the sum of absolute transform and quantized coefficient values may be used as a measure of energy compactness in the transform domain. The number of non-zero quantization coefficients may (e.g., alternatively) be used as the criteria.

The merge candidate list may be ordered based on energy compactness. For example, a merge candidate (e.g., a pair of an intra prediction parameter and a transform type) having the most (e.g., best) energy compactness in the transform domain may be ranked first in the merge candidate list. In examples, merge candidates may be represented as tuples (e.g., comprising an intra prediction parameter and a transform type). The merge candidate leading to best energy compactness in the transform domain may be ranked first in the merge candidate list.

In examples, merge candidate list feeding mechanism(s) may be employed to ensure the merge list contains a minimum number of candidates. For example, for a (e.g., each) set of intra predication parameters present in the merge list under construction, if the candidate does not exist in combination with a particular (e.g., certain) frequently used transform type, such as DST7-DCT7 of DCT2-DCT2 or the implicit MTS that would be used for the considered block shape, a new candidate may be added to the merge list being constructed. The new candidate may comprise the considered intra prediction parameters associated with the transform. For example, the associated transform in combination with this intra prediction parameter(s) may not yet be present in the merge candidate list.

The intra merge mechanism of DIMD intra mode may be extended to the inheritance of transform parameters. It should be appreciated that the examples and/or variants described with respect to TIMD mode herein may be applied (e.g., similarly applied) in the context of an enhanced DIMD intra prediction mode. For example, a merge candidate may comprise DIMD prediction information (e.g., issued from a previously coded CU) and transform parameters.

In examples of a DIMD merge candidate comprising a merged HoG of several previous CU, the transform type may be derived by performing the following. If all the CUs with which the HoG is merged have the same transform type (e.g., the same primary and/or secondary transform type), the merge transform information may comprise that primary and/or secondary transform type. Otherwise (e.g., if all the CUs with which the HoG is merged do not have the same transform type), the merge transform information may comprise a DCT2-DCT primary transform and/or an LFNST index equal to 0. Implicit MTS mechanism(s) may (e.g., alternatively) be employed to obtain the merge transform type of the current CU (e.g., in the case of a merged HoG).

The intra merge mechanism of EIP intra mode may be extended to the inheritance of transform parameters. It should be appreciated that the examples and/or variants described with respect to TIMD mode herein may be applied (e.g., similarly applied) in the context of an enhanced EIP intra prediction mode. For example, previously described examples of the EIP mode may be applied in the context of the EIP intra prediction mode.

The intra merge mechanism of IntraTMP intra mode may be extended to the inheritance of transform parameters. It should be appreciated that the examples and/or variants described with respect to TIMD mode herein may be applied (e.g., similarly applied) in the context of an enhanced IntraTMP mode. For example, previously described examples for the IntraTMP mode may be applied in the context of the IntraTMP merge candidates obtained during the IntraTMP predictor search. For example (e.g., to do so) stored block vector and transform information may be propagated from CU to CU through the IntraTMP merge mechanism.

In examples, the transform-related information storing may (e.g., also) be performed when a CU is coded in IBC mode. In such examples, the so-stored block vector (BV) and transform information may jointly be inherited in a later intra CU coded in IntraTMP mode (e.g., which is also a block-vector based prediction mode) or in IBC mode.

In examples, some reserved value(s) of an IntraTMP index syntax element may be used for identifying some IntraTMP merge candidates which have some attached transform related information. For other IntraTMP index values, the regular IntraTMP process may apply.

The intra merge mechanism of IntraTMP intra mode may be extended to the inheritance of transform parameters. A unified intra merge mode may comprise a constructed unified merge candidate list of intra prediction modes and parameters. Such a list may contain multiple candidates, which may (e.g., each) be associated with different intra prediction modes. These candidates may (e.g., also) include some intra prediction parameters, for example, which may depend on the respective intra prediction mode associated with the candidate. Transform parameters (e.g., as described herein) may be associated with (e.g., attached to) each merge candidate.

In examples, redundancy reduction in MTS may be performed, for example by incorporating inheritance of transform related information.

A decoder may generate a candidate list (e.g., a merge candidate list) and determine, based on the candidate list, an inverse transform type associated with the video block. Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: determining whether a merge mode associated with an intra-type prediction mode (e.g., TIMD, DIMD, EIP, or IntraTMP) is enabled for a video block (e.g., in a picture); if a merge mode is associated with an intra-type prediction mode for the video block, generating a merge candidate list associated with the merge mode; determining, based on obtained transform information associated with a selected candidate of the merge candidate list, an inverse transform type associated with the video block; predicting the video block (e.g., based on a prediction block in the picture); decoding the video block based on the inverse transform type; decoding the picture based on the video block; obtaining the transform information that indicates a primary transform pair and/or a secondary transform identifier associated with the selected candidate; selecting the candidate from the merge candidate list, for example, based on a merge index; performing an inverse transform of a residual coefficient associated with the video block using the inverse transform type and/or applying the inverse transformed residual coefficient to a prediction block (e.g., an intra-predication block) to generate the predicted video block; selecting the candidate associated with intra-type prediction parameter(s) that indicate a prediction mode and/or a fusion weight associated with the selected candidate; predicting the video block further based on the intra-type prediction parameter(s); determining a primary transform type of the video block as the primary transform type of the selected candidate, indicated by the transform information associated with the selected candidate; receiving an indicator indicating that the primary transform type is to be set to a primary transform type of the selected candidate; setting the primary transform type to a primary transform type of the selected candidate, for example, based on the indicator; determining a subset of merge candidates from the merge candidate list and/or selecting the candidate from the determined subset of merge candidates; decoding a syntax element (e.g., a syntax element received via a bitstream) and/or setting a transform type based on a decoded syntax element; decoding a primary transform type syntax element and based on the decoded primary transform type syntax element, setting the primary transform type to a primary transform type of the selected candidate of the subset of merge candidates; decoding a secondary transform type syntax element and based on the decoded secondary transform type syntax element, setting the secondary transform type to a secondary transform type of the selected candidate of the subset of merge candidates; determining a secondary transform type; setting the secondary transform type to a secondary transform type of the selected candidate (e.g., which may be indicated by the transform information associated with the selected candidate); etc.

An encoder may generate a candidate list (e.g., a merge candidate list) and determine, based on the candidate list, an inverse transform type associated with the video block. Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: determining whether a merge mode associated with an intra-type prediction mode (e.g., TIMD, DIMD, EIP, or IntraTMP) is enabled for a video block (e.g., in a picture); if a merge mode is associated with an intra-type prediction mode for the video block, generating a merge candidate list associated with the merge mode; determining, based on obtained transform information associated with a selected candidate of the merge candidate list, an transform type associated with the video block; predicting the video block (e.g., based on a prediction block in the picture); encoding the video block based on the transform type; encoding the picture based on the video block; determining, based on the obtained transform information, a transform type for a transform of a residual coefficient associated with the video block; predicting the video block (e.g., based on a prediction block in the picture) and generating the residual coefficient based on the predicted video block; performing the transform of the residual coefficient based on the transform type; obtaining the transform information that indicates a primary transform pair and/or a secondary transform identifier associated with the selected candidate; selecting the candidate from the merge candidate list, for example, based on a merge index; performing a transform of a residual coefficient associated with the video block using the transform type and/or including the transformed residual coefficient in video data; selecting the candidate associated with intra-type prediction parameter(s) that indicate a prediction mode and/or a fusion weight associated with the selected candidate; predicting the video block further based on the intra-type prediction parameter(s); determining a primary transform type of the video block as the primary transform type of the selected candidate, indicated by the transform information associated with the selected candidate; sending an indicator indicating that the primary transform type is to be set to a primary transform type of the selected candidate; setting the primary transform type to a primary transform type of the selected candidate; determining a subset of merge candidates from the merge candidate list and/or selecting the candidate from the determined subset of merge candidates; setting a transform type and/or encoding a syntax element based on the transform type; setting the primary transform type to a primary transform type of the selected candidate of the subset of merge candidates and/or encoding a primary transform type syntax element to indicate setting the primary transform type to a primary transform type of the selected candidate of the subset of merge candidates; setting the secondary transform type to a secondary transform type of the selected candidate of the subset of merge candidates and/or encoding a secondary transform type syntax element to indicating setting the secondary transform type to a secondary transform type of the selected candidate of the subset of merge candidates; determining a secondary transform type; setting the secondary transform type to a secondary transform type of the selected candidate (e.g., which may be indicated by the transform information associated with the selected candidate); including the transform of the residual coefficient in video data; etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1.  A device for video decoding, comprising:
    a processor configured to:

    determine that a merge mode associated with an intra-type prediction mode is enabled for a video block;
    generate a candidate list associated with the merge mode;
    obtain transform information associated with a selected candidate of the candidate list;
    determine, based on the transform information, an inverse transform type associated with the video block;
    predict the video block; and
    decode the video block based on the inverse transform type.

2.  A device for video encoding, comprising:
    a processor configured to:

    determine that a merge mode associated with an intra-type prediction mode is enabled for a video block;
    generate a candidate list associated with the merge mode;
    obtain transform information associated with a selected candidate of the candidate list;
    determine, based on the transform information, a transform type for a transform of a residual coefficient associated with the video block;
    predict the video block;
    generate the residual coefficient based on the predicted video block; and
    perform the transform of the residual coefficient based on the transform type.

3.  The device of claim 1 or claim 2, wherein the selected candidate is further associated with one or more intra-type prediction parameters, wherein the one or more intra-type prediction parameters indicate at least one of an intra-prediction mode or a fusion weight associated with the selected candidate, and wherein the video block is predicted further based on the one or more intra-type prediction parameters.

4. The device of claim 1, wherein the transform information indicates at least one of a primary transform pair or a secondary transform identifier associated with the selected candidate, and wherein the processor is further configured to:

select the candidate from the candidate list based on a merge index;
perform an inverse transform of a residual coefficient associated with the video block using the inverse transform type; and
apply the inverse transform of the residual coefficient to an intra-prediction block of the video block.

5. The device of claim 2, wherein the transform information indicates at least one of a primary transform pair or a secondary transform identifier associated with the selected candidate, and wherein the processor is further configured to:

select the candidate from the candidate list; and
include the transform of the residual coefficient in video data.

6. The device of claim 4, wherein the inverse transform type is a primary transform type, and the processor is further configured to set the primary transform type to a primary transform type of the selected candidate, wherein the primary transform type of the selected candidate is indicated by the transform information associated with the selected candidate.

7. The device of claim 6, wherein the processor is further configured to receive an indicator indicating that the primary transform type is to be set to a primary transform type of the selected candidate.

8. The device of claim 4, wherein the inverse transform type is a primary transform type, and the processor is further configured to:

determine a subset of merge candidates from the candidate list, wherein the selected candidate is in the subset of merge candidates;
decode a primary transform type syntax element; and
set, based on decoded primary transform type syntax element, the primary transform type to a primary transform type of the selected candidate of the subset of merge candidates.

9. The device of claim 4, wherein the inverse transform type is a secondary transform type, and the processor is further configured to set the secondary transform type to a secondary transform type of the selected candidate, wherein the secondary transform type of the selected candidate is indicated by the transform information associated with the selected candidate.

10. The device of claim 4, wherein the inverse transform type is a secondary transform type, and the processor is further configured to:

determine a subset of merge candidates from the candidate list, wherein the selected candidate is in the subset of merge candidates;
decode a secondary transform type syntax element; and
set, based on decoded secondary transform type syntax element, the secondary transform type to a secondary transform type of the selected candidate of the subset of merge candidates.

11. The device of any one of claims 1, 2, and 4-10, wherein intra-type prediction mode is template-based intra mode derivation (TIMD), decoder side intra mode derivation (DIMD), Extrapolation filter-based intra prediction mode (EIP) or, intra template matching prediction (IntraTMP).

12. A method for video decoding, comprising:

determining that a merge mode associated with an intra-type prediction mode is enabled for a video block;
generating a candidate list associated with the merge mode;
obtaining transform information associated with a selected candidate of the candidate list;
determining, based on the transform information, an inverse transform type associated with the video block;
predicting the video block; and

decoding the video block based on the inverse transform type.

13. A method for video encoding, comprising:

determining that a merge mode associated with an intra-type prediction mode is enabled for a video block;
generating a candidate list associated with the merge mode;
obtaining transform information associated with a selected candidate of the candidate list;
determining, based on the transform information, a transform type for a transform of a residual coefficient associated with the video block;
predicting the video block;
generating the residual coefficient based on the predicted video block; and
performing the transform of the residual coefficient based on the transform type.

14. The method of claim 12 or claim 13, wherein the selected candidate is further associated with one or more intra-type prediction parameters, wherein the one or more intra-type prediction parameters indicate at least one of an intra-prediction mode or a fusion weight associated with the selected candidate, and wherein the video block is predicted further based on the one or more intra-type prediction parameters.

15. The method of claim 12 or claim 13, wherein the transform information indicates at least one of a primary transform pair or a secondary transform identifier associated with the selected candidate, and wherein the method further comprises:

selecting the candidate from the candidate list based on a merge index;
performing an inverse transform of a residual coefficient associated with the video block using the inverse transform type; and
applying the inverse transform of the residual coefficient to an intra-prediction block of the video block.

**FIG. 1A**

EP 4 633 153 A1

116

102

122

120
Transceiver

124
Speaker/
Microphone

134
Power
Source

126
Keypad

118
Processor

136
GPS
Chipset

128
Display/
Touchpad

138
Peripherals

130
Non-
Removable
Memory

132
Removable
Memory

**FIG. 1B**

**FIG. 1C**

EP 4 633 153 A1

FIG. 1D

**200**

Pre-encoding processing `201`

Image Partitioning `202`

⊕ `210` (+ / -)

Transform `225`

Quantization `230`

Entropy Coding `245`

Inverse Quantization `240`

Inverse Transform `250`

⊕ `255`

`205`

Intra prediction `260`

Motion Compensation `270`

Motion Estimation `275`

In-loop Filters `265`

Reference Picture Buffer `280`

**FIG. 2**

EP 4 633 153 A1

**300**

**FIG. 3**

EP 4 633 153 A1

**FIG. 4**

EP 4 633 153 A1

**FIG. 5**

EP 4 633 153 A1

**FIG. 6**

$$\omega_1 = \frac{43}{64} \times \frac{ampl(M_1)}{ampl(M_1)+ampl(M_2)}$$

$$\omega_2 = \frac{43}{64} \times \frac{ampl(M_2)}{ampl(M_1)+ampl(M_2)}$$

$$\omega_3 = \frac{21}{64}$$

$$\Sigma^3_{i=1}\omega_i \times Pred_i$$

FIG. 7

FIG. 8

EP 4 633 153 A1

**FIG. 9**

44

FIG. 10

reference line 3

reference line 2

reference line 1

top template

current block

left template

**FIG. 11**

## FIG. 12

input of EIP

output of EIP

**FIG. 13**

**FIG. 14**

```
If( cu_sgpm_flag )
{
  partition_mode_idx
  intra_pred_mode0_idx
  intra_pred_mode1_idx
}
```

```
If( cu_sgpm_flag )
{
  sgpm_cand_idx
}
```
→ partition_mode_idx
  intra_pred_mode0_idx
  intra_pred_mode1_idx

**FIG. 15**

FIG. 16

GPM partitioning boundary

**FIG. 17**

EP 4 633 153 A1

FIG. 18

FIG. 19

EP 4 633 153 A1

4

4 {

**FIG. 20**

4

4 {

**FIG. 21**

**FIG. 22**

**FIG. 23**

Europäisches
Patentamt

European
Patent Office

Office européen
des brevets

# EUROPEAN SEARCH REPORT

**Application Number**

EP 24 30 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/308662 A1 (AHN YONG JO [KR] ET AL) 28 September 2023 (2023-09-28) * paragraph [0061] - paragraph [0066] * * paragraph [0102] - paragraph [0112] * * figure 5 *<br><br>----- | 1-15 | INV.<br>H04N19/12<br>H04N19/157<br>H04N19/176<br>H04N19/593<br>H04N19/61 |
| X | NASER (INTERDIGITAL) K ET AL: "EE2-1.2: IntraTMP with Merge Candidates", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ),<br>,<br>no. JVET-AG0151 10 January 2024 (2024-01-10), XP030314107, Retrieved from the Internet: URL:https://jvet-experts.org/doc_end_user/ documents/33_Teleconference/wg11/JVET-AG01 51-v1.zip JVET-AG0151-0.2.docx [retrieved on 2024-01-10] * the whole document *<br><br>----- | 1,2,4-14 | |
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ),<br>,<br>no. JVET-AG2025 ; m66954 29 March 2024 (2024-03-29), XP030316747, Retrieved from the Internet: URL:https://jvet-experts.org/doc_end_user/ documents/33_Teleconference/wg11/JVET-AG20 25-v1.zip JVET-AG2025-v1.docx [retrieved on 2024-03-29] * section 3.3.4 *<br><br>----- | 1-15 | **TECHNICAL FIELDS SEARCHED (IPC)**<br><br>H04N |

-/--

The present search report has been drawn up for all claims

| Place of search | Date of completion of the search | Examiner |
|---|---|---|
| Berlin | 25 September 2024 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHAO XIN ET AL: "Transform Coding in the VVC Standard", IEEE TRANSACTIONS ON CIRCUITS AND SYSTEMS FOR VIDEO TECHNOLOGY, IEEE, USA, vol. 31, no. 10, 9 June 2021 (2021-06-09), pages 3878-3890, XP011880881, ISSN: 1051-8215, DOI: 10.1109/TCSVT.2021.3087706 [retrieved on 2021-09-30] * section III * ----- | 9,10 | |
| A | XU (OPPO) L ET AL: "EE2-1.14: An extrapolation filter-based intra prediction mode", 145. MPEG MEETING; 20240122 - 20240126; ONLINE; (MOTION PICTURE EXPERT GROUP OR ISO/IEC JTC1/SC29/WG11), , no. m65943 10 January 2024 (2024-01-10), XP030314942, Retrieved from the Internet: URL:https://dms.mpeg.expert/doc_end_user/documents/145_Teleconference/wg11/m65943-JVET-AG0058-v1-JVET-AG0058-v1.zip JVET-AG0058-v1.docx [retrieved on 2024-01-10] * section 1 * ----- -/-- | 11 | TECHNICAL FIELDS SEARCHED (IPC) |

The present search report has been drawn up for all claims

| Place of search | Date of completion of the search | Examiner |
|---|---|---|
| Berlin | 25 September 2024 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches Patentamt
European Patent Office
Office européen des brevets

# EUROPEAN SEARCH REPORT

**Application Number**

EP 24 30 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BLESTEL (OFINNO) M ET AL: "AHG12: DIMD Merge List", 145. MPEG MEETING; 20240122 - 20240126; ONLINE; (MOTION PICTURE EXPERT GROUP OR ISO/IEC JTC1/SC29/WG11), , no. m65977 10 January 2024 (2024-01-10), XP030315025, Retrieved from the Internet: URL:https://dms.mpeg.expert/doc_end_user/d ocuments/145_Teleconference/wg11/m65977-JV ET-AG0084-v1-JVET-AG0084-v1.zip JVET-AG0084.docx [retrieved on 2024-01-10] * sections 1-2 * ----- | 3,11,15 | |
| | | | **TECHNICAL FIELDS SEARCHED (IPC)** |

The present search report has been drawn up for all claims

| Place of search | Date of completion of the search | Examiner |
|---|---|---|
| Berlin | 25 September 2024 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5559

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | Publication date |
|---|---|---|---|
| US 2023308662 A1 | 28-09-2023 | US 2023308662 A1 | 28-09-2023 |
| | | WO 2022119302 A1 | 09-06-2022 |

EPO FORM P0459

For more details about this annex : see Official Journal of the European Patent Office, No. 12/82